(19) Europäisches Patentamt European Patent Office Office européen des brevets

(11) **EP 4 467 278 A1**

(12) **EUROPEAN PATENT APPLICATION**
published in accordance with Art. 153(4) EPC

(43) Date of publication:
**27.11.2024 Bulletin 2024/48**

(21) Application number: **23743355.2**

(22) Date of filing: **20.01.2023**

(51) International Patent Classification (IPC):
**B23K 26/364** (2014.01) **B23K 26/073** (2006.01)
**B23K 26/082** (2014.01) **C21D 8/12** (2006.01)

(52) Cooperative Patent Classification (CPC):
**B23K 26/073; B23K 26/082; B23K 26/364; C21D 8/12**

(86) International application number:
**PCT/JP2023/001757**

(87) International publication number:
**WO 2023/140363 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2022 JP 2022007442**

(71) Applicant: **NIPPON STEEL CORPORATION**
**Chiyoda-ku**
**Tokyo 100-8071 (JP)**

(72) Inventors:
• **SAKAI, Tatsuhiko**
  **Tokyo 100-8071 (JP)**
• **HAMAMURA, Hideyuki**
  **Tokyo 100-8071 (JP)**

(74) Representative: **Vossius & Partner**
**Patentanwälte Rechtsanwälte mbB**
**Siebertstrasse 3**
**81675 München (DE)**

(54) **GRAIN-ORIENTED ELECTRICAL STEEL SHEET, GRAIN-ORIENTED ELECTRICAL STEEL SHEET MANUFACTURING DEVICE, AND GRAIN-ORIENTED ELECTRICAL STEEL SHEET MANUFACTURING METHOD**

(57) A grain-oriented electrical steel sheet having a rolling direction and a sheet width direction orthogonal to the rolling direction along a steel sheet surface, in which the rolling direction coincides with an easy magnetization direction of the grain-oriented electrical steel sheet, the grain-oriented electrical steel sheet has a dot groove array extending along a dot groove array direction intersecting the sheet width direction on the steel sheet surface, the dot groove array is configured by linearly arranging a plurality of substantially elliptical dot grooves or a plurality of grouped dot grooves formed by linearly connecting a plurality of holes, and a major axis of the dot groove or the grouped dot groove intersects with the dot groove array direction.

FIG. 1

EP 4 467 278 A1

**Description**

[Technical Field of the Invention]

The present invention relates to a grain-oriented electrical steel sheet, a grain-oriented electrical steel sheet manufacturing apparatus, and a grain-oriented electrical steel sheet manufacturing method.
Priority is claimed on Japanese Patent Application No. 2022-007442, filed January 20, 2022, the content of which is incorporated herein by reference.

[Related Art]

A magnetic domain control process for forming a groove on a surface of a grain-oriented electrical steel sheet (hereinafter, it may be simply referred to as a steel sheet) has been put to practical use. In this magnetic domain control, three performance factors of reduction in iron loss, high resistance to repeated bending, and suppression of decrease in magnetic flux density that can be generated are particularly important.
That is, when a wound transformer iron core is manufactured by bending a steel sheet, if iron loss can be reduced, power loss can be reduced. In addition, if the resistance to repeated bending can be improved, a risk of fracture of the steel sheet at its bent portion can be reduced. Furthermore, if the decrease in magnetic flux density that can be generated can be suppressed, the wound transformer iron core to be manufactured can be downsized.
For example, in a method for reducing iron loss by forming a groove on a surface of a grain-oriented electrical steel sheet, since an easy magnetization direction of the grain-oriented electrical steel sheet coincides with the rolling direction, when the groove forming direction is a direction perpendicular to the rolling direction (that is, a direction parallel to the sheet width direction), the iron loss reduction effect is the highest. However, in this case, the fracture risk at the time of bending is also the highest. Furthermore, the groove also has a problem of decreasing the magnetic flux density that can be generated when the same magnetizing force is applied.
Here, as the numerical value of the iron loss which is an important performance factor of the wound transformer iron core, a numerical value defined by $W17/50$ is generally used. This numerical value is a power loss per unit weight (1 kg) of the steel sheet when a magnetizing force is forcibly applied to the steel sheet by an AC magnetic field with an AC frequency of 50 Hz until the magnetic flux density in the steel sheet reaches 1.7 T (Tesla), and is expressed in units of W/kg.
In addition, the magnetic flux density that can be generated when a certain magnetizing force is applied to the steel sheet is also an important performance factor as the grain-oriented electrical steel sheet, and a numerical value defined by $B8$ is generally used. This numerical value is a magnetic flux density generated when a magnetizing force of 800 A/m is applied to the steel sheet, and is expressed in units of T (Tesla).
It is preferable that the numerical value of $W17/50$ is low from the viewpoint of iron loss, and on the other hand, it is preferable that the numerical value of $B8$ is high from the viewpoint of magnetic flux density. Therefore, in order to make these numerical values preferable, various methods have been devised for forming continuous grooves on the steel sheet surface using machining, chemical machining by etching, or machining by laser beam.
For example, in the laser processing method, a method is known in which a coil with a length of about 1 m in the sheet width direction is divided into 4 to 10 sections, and a laser processing apparatus is disposed at a position corresponding to each section to form a continuous groove for each section. In addition, a method of forming a groove by scanning elliptical spotlight is also known.

[Citation List]

[Patent Document]

[Patent Document 1]
PCT International Publication No. WO 2016/171129
[Patent Document 2]
PCT International Publication No. WO 2017/171013
[Patent Document 3]
PCT International Publication No. WO 2016/171130
[Patent Document 4]
PCT International Publication No. WO 97/024466

[Summary of Invention]

[Problems to be Solved by the Invention]

For example, in the techniques disclosed in Patent Documents 1 and 2, the direction of forming the continuous groove of each section divided in the sheet width direction of the coil is inclined with respect to the rolling direction. In this case, although the bending resistance of the steel sheet is excellent, the iron loss reduction effect is small. In addition, since the grooves are continuously formed, the decrease in magnetic flux density cannot be avoided.

Also, in Patent Document 3, the groove forming direction in each of the divided sections is substantially perpendicular to the rolling direction. In this case, although the iron loss reduction effect is high, the bending resistance is deteriorated. In addition, the decrease in magnetic flux density cannot be also avoided.

Here, when the linear grooves are divided into about 4 to 5 sections in the sheet width direction, a portion where no groove is formed is formed on the surface of a part between the linear grooves adjacent to each other. Therefore, the decrease in magnetic flux density is small at the portion without groove. However, since there are only a few such portions in the sheet width direction, it is not possible to uniformly suppress the decrease in magnetic flux density in the entire sheet. Since the steel sheet used for the wound transformer iron core is cut to about 100 mm to 300 mm in the sheet width direction and used, it is desirable that the characteristics of the steel sheet in the width direction are uniform.

In addition, Patent Document 4 discloses a method of forming dimples in a row on a surface of a grain-oriented electrical steel sheet. In this case, since no groove is formed (or the groove is shallow) between the dimples adjacent to each other, the magnetic flux easily passes therethrough, and it is possible to expect substantially uniform suppression of decrease in magnetic flux density at each position in the sheet width direction. However, in the dot groove array in which both ends of each dimple are in contact with each other in a daisy chain, if the forming direction (extending direction) is perpendicular to the rolling direction, the iron loss improving effect is high, but the resistance to repeated bending is deteriorated.

In addition, when the forming direction of the dot groove array is inclined with respect to the rolling direction, there is a problem that the resistance to repeated bending is improved, but the iron loss improving effect is deteriorated. That is, in the conventional dot groove array, even if the deterioration margin of the magnetic flux density was suppressed, both the iron loss suppression and the resistance to repeated bending strength could not be achieved as in the case of the continuous groove.

Therefore, in the related art in which a continuous groove or a conventional dot groove array was formed, it was not possible to simultaneously satisfy all three of low iron loss, high resistance to repeated bending, and high magnetic flux density.

The present invention has been made in view of the above problems, and an object of the present invention is to provide, in a magnetic domain control technology for improving iron loss by forming grooves on a surface of a grain-oriented electrical steel sheet, a grain-oriented electrical steel sheet simultaneously having three performance factors of suppression of decrease in resistance to repeated bending workability, suppression of decrease in magnetic flux density, and reduction in iron loss. Another object of the present invention is to provide a grain-oriented electrical steel sheet manufacturing apparatus and a grain-oriented electrical steel sheet manufacturing method capable of manufacturing the grain-oriented electrical steel sheet.

[Means for Solving the Problem]

In order to solve the above problems and achieve the objects, the present invention adopts the following aspects.

(1) That is, a grain-oriented electrical steel sheet according to one aspect of the present invention is:

a grain-oriented electrical steel sheet having a rolling direction and a sheet width direction orthogonal to the rolling direction along a steel sheet surface, wherein
the rolling direction coincides with an easy magnetization direction of the grain-oriented electrical steel sheet,
the grain-oriented electrical steel sheet has a dot groove array extending along a dot groove array direction intersecting the sheet width direction on the steel sheet surface,
the dot groove array is configured by linearly arranging a plurality of substantially elliptical dot grooves or a plurality of grouped dot grooves formed by linearly connecting a plurality of holes, and
a major axis of the dot groove or the grouped dot groove intersects with the dot groove array direction.

(2) The grain-oriented electrical steel sheet according to (1) above, wherein
when an angle formed by the major axis with respect to the sheet width direction is $\theta g$ [°] and an angle formed by the dot groove array direction with respect to the sheet width direction is $\theta s$ [°], the following (Formula 1) to (Formula 3) may be

satisfied:

$$0° \leq |\theta g| \leq 10° \cdots \text{(Formula 1)}$$

$$0° < |\theta s| \leq 30° \cdots \text{(Formula 2)}$$

$$|\theta g| \leq |\theta s| \cdots \text{(Formula 3)}.$$

(3) The grain-oriented electrical steel sheet according to (1) or (2) above may adopt the following configuration:

the dot groove array includes the plurality of dot grooves; and
when a length along a direction of the major axis of the dot groove is dc [$\mu$m] and an interval of end portions of the dot grooves adjacent to each other along the sheet width direction is D [$\mu$m], the following (Formula 4) is satisfied:

$$-0.3 \leq (D/dc) \leq 0.2 \cdots \text{(Formula 4)}$$

wherein, in the line of sight viewed along the rolling direction, the interval D [$\mu$m] is a positive value in a case where the end portions do not overlap each other, 0 [$\mu$m] in a case where the end portions are in contact at one point, and a negative value in a case where the end portions overlap each other.

(4) The electrical steel sheet according to any one of (1) to (3) above may adopt the following configuration:

the dot groove array includes the plurality of dot grooves; and
when a length along the direction of the major axis of the dot groove is dc [$\mu$m], a direction orthogonal to the major axis is a minor axis direction of the dot groove, and a length along the minor axis direction of the dot groove is dL [$\mu$m], the following (Formula 5) and (Formula 6) are satisfied. The absolute maximum value of the length dc [$\mu$m] may be 30000 $\mu$m.

$$10 \ \mu\text{m} \leq dL \leq 300 \ \mu\text{m} \cdots \text{(Formula 5)}$$

$$dL \leq dc \cdots \text{(Formula 6)}$$

(5) The electrical steel sheet according to any one of (1) to (4) above may adopt the following configuration:

the dot groove array comprises the plurality of dot grooves; and
when a maximum depth of the dot groove is h [$\mu$m], the following (Formula 7) is satisfied:

$$5 \ \mu\text{m} \leq h \leq 100 \ \mu\text{m} \cdots \text{(Formula 7)}.$$

(6) The electrical steel sheet according to any one of (1) to (5) above may adopt the following configuration:

the plural dot groove arrays are formed on the steel sheet surface at equal intervals in the rolling direction; and
when an interval of the dot groove arrays adjacent to each other along the rolling direction is PL [mm], the following (Formula 8) is satisfied:

$$1 \ \text{mm} \leq PL \leq 10 \ \text{mm} \cdots \text{(Formula 8)}.$$

(7) The electrical steel sheet according to any one of (1) to (6) above may adopt the following configuration:

the dot groove array is divided into two or more in the sheet width direction, and when an interval between end portions of the dot groove arrays adjacent to each other at a division position along the sheet width direction is Da [mm], the following (Formula 9) is satisfied:

$$-10 \ \text{mm} \leq Da \leq 2 \ \text{mm} \cdots \text{(Formula 9)}$$

wherein, in the line of sight viewed along the rolling direction, the interval Da [mm] is a positive value in a case where the end portions do not overlap each other, 0 [µm] in a case where the end portions are in contact at one point, and a negative value in a case where the end portions overlap each other.

(8) Also, a grain-oriented electrical steel sheet manufacturing apparatus according to an aspect of the present invention is:
a grain-oriented electrical steel sheet manufacturing apparatus for manufacturing the grain-oriented electrical steel sheet according to any one of (1) to (7) above by irradiating the steel sheet surface with a laser beam to form the dot groove array comprising the dot grooves, the apparatus including:

a laser irradiation unit that irradiates the laser beam;
a first optical system that forms a spotlight of the laser beam into an elliptical shape and adjusts a direction of the major axis of the ellipse formed by the spotlight;
a scanning mirror that reflects the laser beam adjusted by the first optical system to change a traveling direction, and moves a position on the steel sheet surface irradiated with the spotlight along a scanning direction intersecting the sheet width direction; and
a second optical system that transmits or reflects the laser beam reflected by the scanning mirror and condenses the laser beam on the steel sheet surface, wherein
the first optical system adjusts the direction of the major axis of the ellipse formed by the spotlight on the steel sheet surface in a direction intersecting the scanning direction,
the dot groove array is formed on the steel sheet surface by forming the dot grooves on the steel sheet surface for the each spotlight condensed on the steel sheet surface by the second optical system, and
when a pulse frequency of the laser beam is Fs [Hz], a moving speed of the spotlight on the steel sheet surface is Vs [m/s], a center-to-center distance of the dot grooves adjacent to each other along the sheet width direction is Pc [µm], a length of the dot grooves along the direction of the major axis is dc [µm], an interval of end portions of the dot grooves adjacent to each other along the sheet width direction is D [µm], an angle formed by the major axis with respect to the sheet width direction is θg [°], and an angle formed by the dot groove array direction with respect to the sheet width direction is θs [°], the following (Formula 10) and (Formula 11) are satisfied:

$$Pc = D + dc \times \cos\theta g \cdots \text{(Formula 10)}$$

$$Pc/\cos\theta s = (Vs/Fs) \times 10^6 \cdots \text{(Formula 11)}$$

(9) Moreover, a grain-oriented electrical steel sheet manufacturing apparatus according to another aspect of the present invention is: a grain-oriented electrical steel sheet manufacturing apparatus for manufacturing the grain-oriented electrical steel sheet according to any one of (1) to (7) above by irradiating the steel sheet surface with a laser beam to form the dot groove array comprising the dot grooves, the apparatus including:

a laser irradiation unit that irradiates the laser beam;
a first optical system that forms a spotlight of the laser beam into an elliptical shape and adjusts a direction of the major axis of the ellipse formed by the spotlight;
a second optical system that transmits the laser beam adjusted by the first optical system and condenses the laser beam on the steel sheet surface; and
a scanning mirror that reflects the laser beam transmitted through the second optical system to change a traveling direction, and moves a position on the steel sheet surface irradiated with the spotlight along a scanning direction intersecting the sheet width direction, wherein
the first optical system adjusts the direction of the major axis of the ellipse formed by the spotlight on the steel sheet surface in a direction intersecting the scanning direction,
the dot groove array is formed on the steel sheet surface by forming the dot grooves on the steel sheet surface for the each spotlight condensed on the steel sheet surface by the second optical system, and
when a pulse frequency of the laser beam is Fs [Hz], a moving speed of the spotlight on the steel sheet surface is Vs [m/s], a center-to-center distance of the dot grooves adjacent to each other along the sheet width direction is Pc [µm], a length of the dot grooves along the direction of the major axis is dc [µm], an interval of end portions of the dot grooves adjacent to each other along the sheet width direction is D [µm], an angle formed by the major axis with respect to the sheet width direction is θg [°], and an angle formed by the dot groove array direction with respect to the sheet width direction is θs [°], the following (Formula 12) and (Formula 13) are satisfied:

$$Pc = D + dc \times \cos\theta g \cdots \text{(Formula 12)}$$

$$Pc/\cos\theta s = (Vs/Fs) \times 10^6 \cdots \text{(Formula 13)}.$$

(10) Further, a grain-oriented electrical steel sheet manufacturing apparatus according to another aspect of the present invention is: a grain-oriented electrical steel sheet manufacturing apparatus for manufacturing the grain-oriented electrical steel sheet according to (1) or (2) above by irradiating the steel sheet surface with a laser beam to form the dot groove array comprising the grouped dot grooves, the apparatus including:

a laser irradiation unit that irradiates the laser beam;
a first optical system that forms a spotlight of the laser beam into an elliptical shape and adjusts a direction of the major axis of the ellipse formed by the spotlight;
a laser beam intensity profile conversion element that transmits the laser beam adjusted by the first optical system and splits the laser beam into a plurality of intensity profiles, thereby converting the laser beam into continuous spotlights continuing in a group;
a scanning mirror that reflects the continuous spotlights converted by the laser beam intensity profile conversion element to change a traveling direction, and moves a position on the steel sheet surface on which a central position of each group of the continuous spotlights is irradiated, along a scanning direction intersecting the sheet width direction; and
a third optical system that transmits the continuous spotlights reflected by the scanning mirror and condenses the continuous spotlights on the steel sheet surface, wherein
the first optical system adjusts a direction of the continuous direction of the continuous spotlights on the steel sheet surface to a direction intersecting the scanning direction,
the dot groove array is formed on the steel sheet surface by forming the grouped dot grooves on the steel sheet surface for each of the continuous spotlights condensed on the steel sheet surface by the third optical system, and when a pulse frequency of the laser beam is Fs [Hz], a moving speed of the spotlight on the steel sheet surface is Vs [m/s], a center-to-center distance of the grouped dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 14) and (Formula 15) are satisfied:

$$Pc = D + dc \times \cos\theta g \cdots \text{(Formula 14)}$$

$$Pc/\cos\theta s = (Vs/Fs) \times 10^6 \cdots \text{(Formula 15)}.$$

(11) Also, a grain-oriented electrical steel sheet manufacturing method according to an aspect of the present invention is:
a grain-oriented electrical steel sheet manufacturing method for manufacturing the grain-oriented electrical steel sheet according to any one of (1) to (7) above by irradiating the steel sheet surface with a laser beam to form the dot groove array comprising the dot grooves, the method including:

a first step of forming a spotlight of the laser beam into an elliptical shape and adjusting a direction of the major axis of the ellipse formed by the spotlight;
a second step of changing a traveling direction of the laser beam in which the direction of the major axis is adjusted, and moving a position on the steel sheet surface irradiated with the spotlight along a scanning direction intersecting the sheet width direction; and
a third step of condensing the spotlight on the steel sheet surface, wherein

in the first step, the direction of the major axis of the ellipse formed by the spotlight on the steel sheet surface is adjusted in a direction intersecting the scanning direction, and

in the third step, the dot groove array is formed on the steel sheet surface by forming the dot grooves on the steel sheet surface for the each spotlight condensed on the steel sheet surface.

(12) Moreover, a grain-oriented electrical steel sheet manufacturing method according to another aspect of the present invention is:

a grain-oriented electrical steel sheet manufacturing method for manufacturing the grain-oriented electrical steel sheet according to (1) or (2) above by irradiating the steel sheet surface with a laser beam to form the dot groove array comprising the grouped dot grooves, the method including:

a fourth step of forming a spotlight of the laser beam into an elliptical shape and adjusting a direction of the major axis of the ellipse formed by the spotlight;

a fifth step of splitting the laser beam in which the direction of the major axis is adjusted into a plurality of intensity profiles to convert the laser beam into continuous spotlights continuing in a group;

a sixth step of moving a position on the steel sheet surface on which a central position of the each group of the continuous spotlights is irradiated, along a scanning direction intersecting the sheet width direction; and

a seventh step of condensing the continuous spotlights on the steel sheet surface, wherein

in the fifth step, a direction of the continuous direction of the continuous spotlights on the steel sheet surface is adjusted to a direction intersecting the scanning direction, and

in the seventh step, the grouped dot grooves are formed on the steel sheet surface for each of the continuous spotlights condensed on the steel sheet surface to form the dot groove array on the steel sheet surface.

(13) The grain-oriented electrical steel sheet manufacturing method according to (11) or (12), wherein when a pulse frequency of the laser beam is Fs [Hz], a moving speed of the spotlight on the steel sheet surface is Vs [m/s], a center-to-center distance of the grouped dot grooves adjacent to each other along the sheet width direction is Pc [$\mu$m], a length of the dot grooves along the direction of the major axis is dc [$\mu$m], an interval of end portions of the dot grooves adjacent to each other along the sheet width direction is D [$\mu$m], an angle formed by the major axis with respect to the sheet width direction is $\theta$g [°], and an angle formed by the dot groove array direction with respect to the sheet width direction is $\theta$s [°], the following (Formula 16) and (Formula 17) may be satisfied:

$$Pc = D + dc \times \cos\theta g \cdots \text{(Formula 16)}$$

$$Pc/\cos\theta s = (Vs/Fs) \times 10^6 \cdots \text{(Formula 17)}.$$

[Effects of the Invention]

According to each of the above aspects of the present invention, it is possible to provide a grain-oriented electrical steel sheet in which deterioration in resistance to repeated bending workability is suppressed, deterioration in magnetic flux density is suppressed, and iron loss is also reduced. In addition, it is possible to provide a grain-oriented electrical steel sheet manufacturing apparatus and a grain-oriented electrical steel sheet manufacturing method for manufacturing the grain-oriented electrical steel sheet.

[Brief Description of the Drawings]

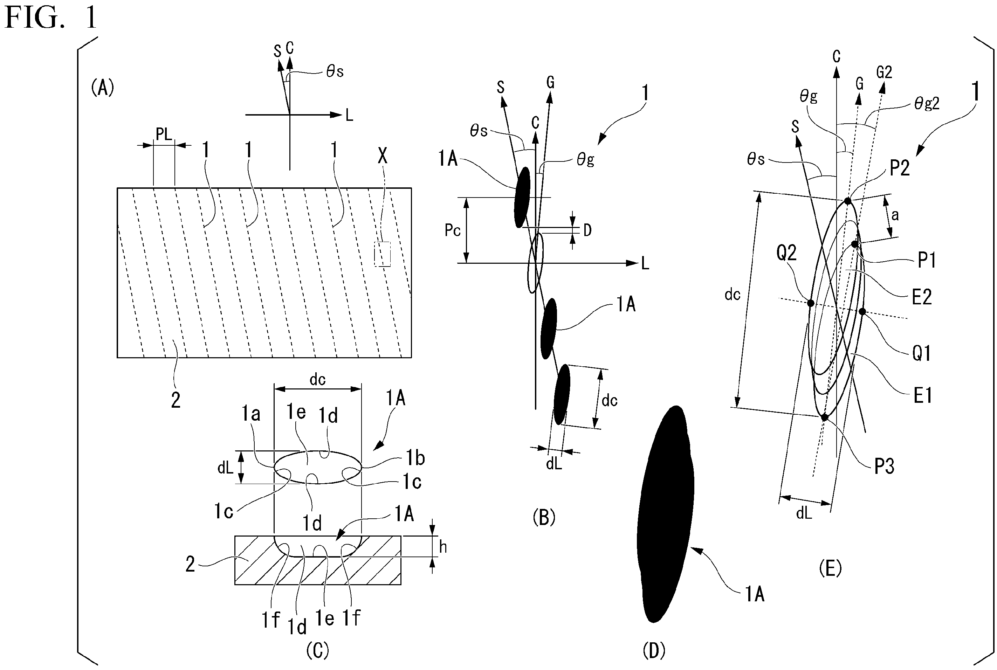

FIG. 1 is a view showing a grain-oriented electrical steel sheet according to a first embodiment of the present invention, in which (A) is a plane view of the grain-oriented electrical steel sheet, (B) is a partially enlarged view showing a dot groove array formed on an upper surface of the grain-oriented electrical steel sheet and is an enlarged view of an X portion of (A), (C) is an explanatory view in which one of dot grooves constituting the dot groove array is viewed in plane view and in cross-sectional view including a major axis of the dot groove and perpendicular to a steel sheet surface, (D) is an enlarged view of the dot groove, and (E) is a view for describing that the dot groove is formed by movement of elliptically condensed spotlight.

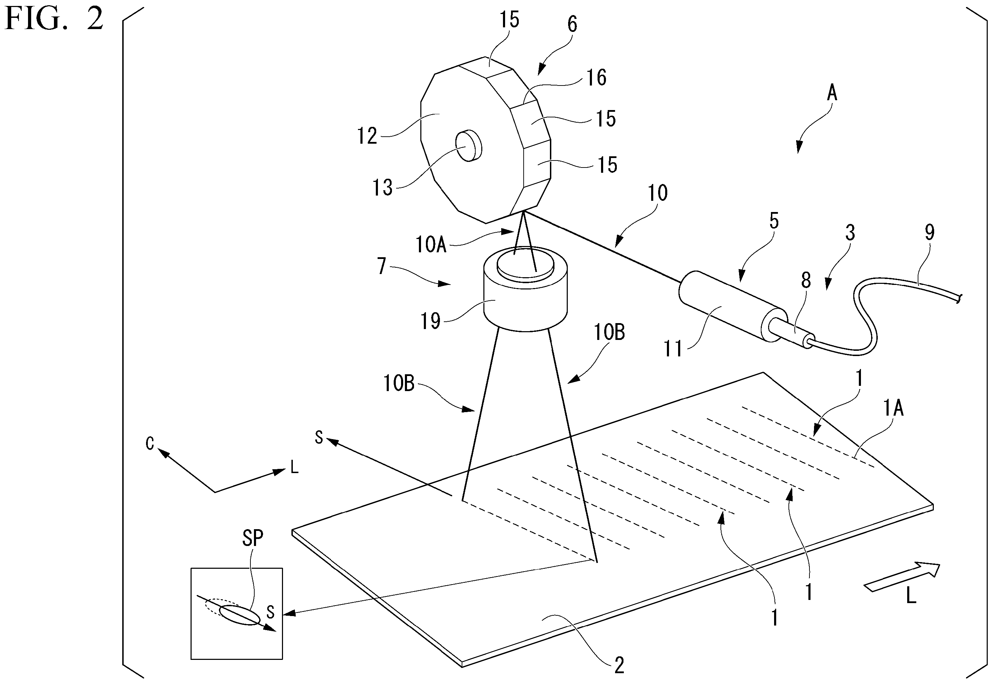

FIG. 2 is a perspective view showing a laser processing apparatus which is a grain-oriented electrical steel sheet manufacturing apparatus according to the first embodiment and a grain-oriented electrical steel sheet being processed.

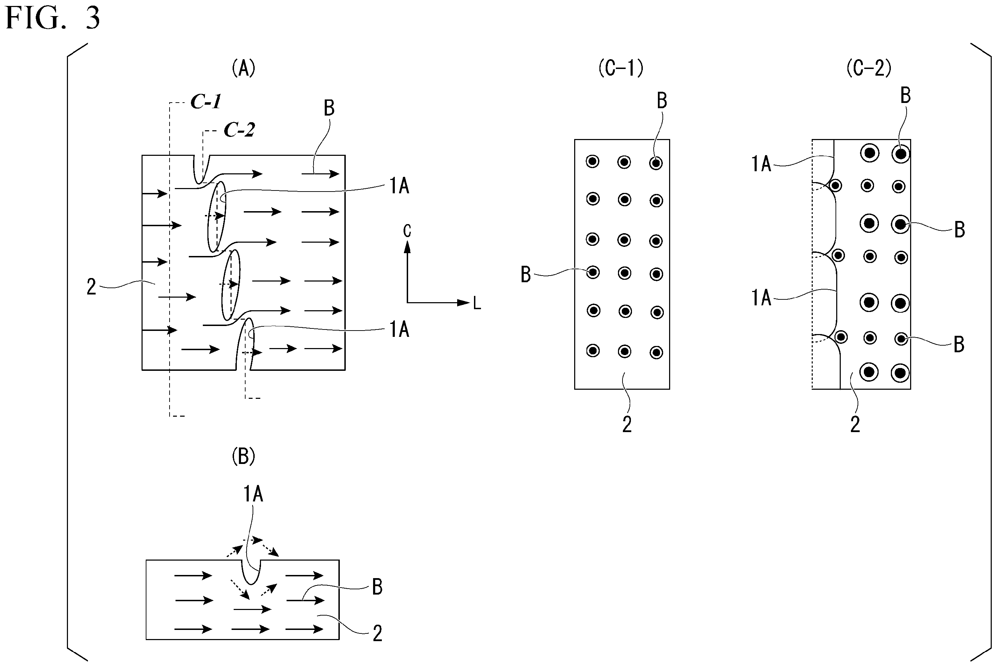

FIG. 3 is a view showing directions of magnetic fluxes in the grain-oriented electrical steel sheet according to the first embodiment, in which (A) is a partially enlarged view of a portion corresponding to FIG. 1(B), (B) is a partially enlarged cross-sectional view of the grain-oriented electrical steel sheet as viewed from direction C, and (C-1) and (C-2) are partially enlarged cross-sectional views of the grain-oriented electrical steel sheet as viewed from direction L.

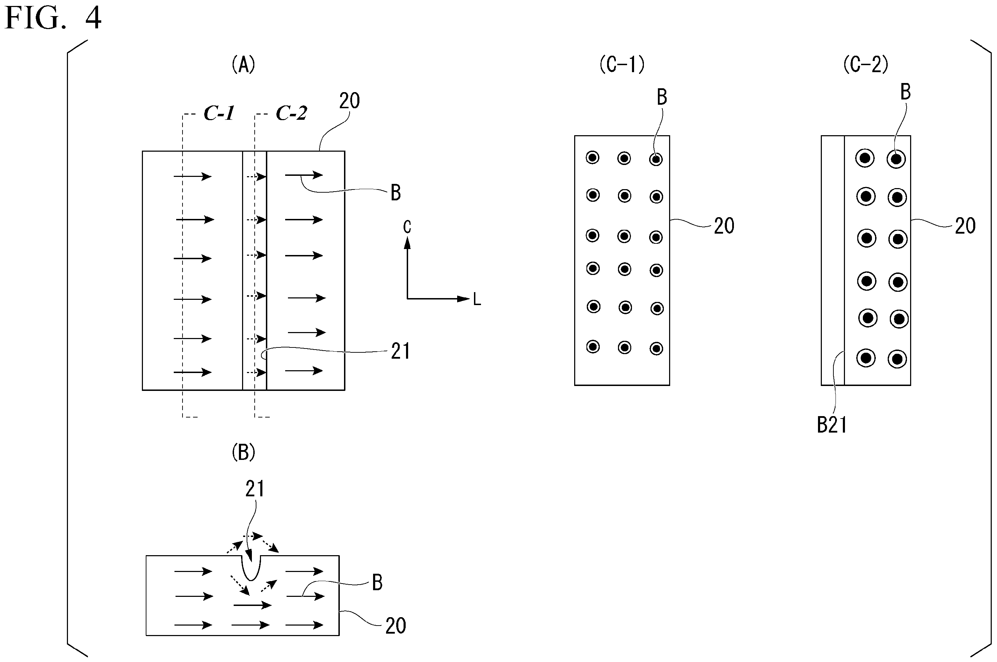

FIG. 4 is a view showing directions of magnetic fluxes in a grain-oriented electrical steel sheet having conventional grooves, in which (A) is a partially enlarged view of the grain-oriented electrical steel sheet in plane view, (B) is a partially enlarged cross-sectional view of the grain-oriented electrical steel sheet as viewed from direction C, and (C-1) and (C-2) are partially enlarged cross-sectional views of the grain-oriented electrical steel sheet as viewed from direction L.

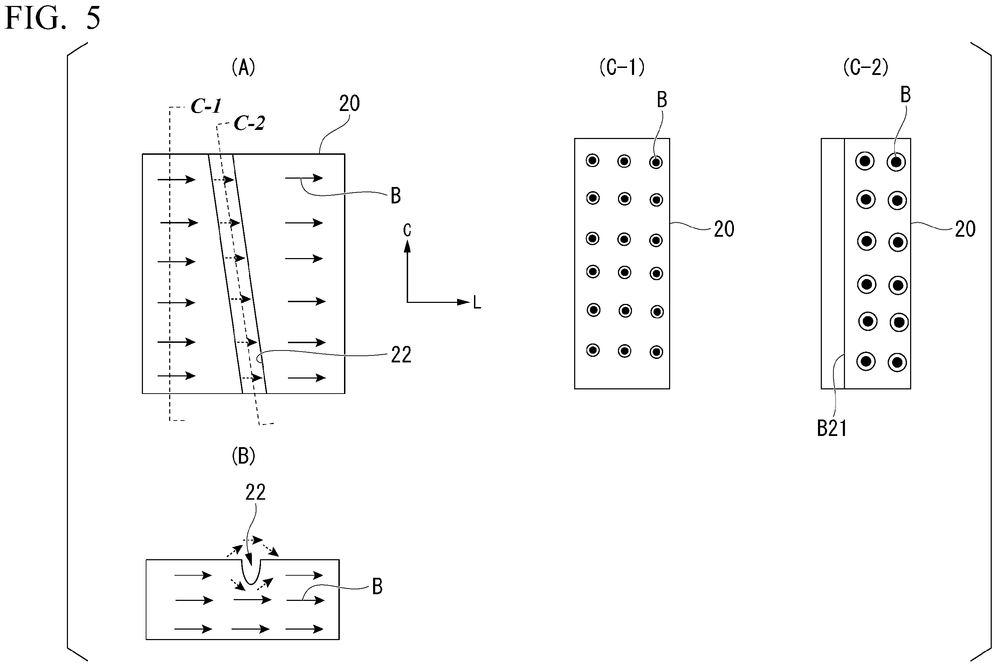

FIG. 5 is a view showing directions of magnetic fluxes in a grain-oriented electrical steel sheet having conventional inclined grooves, in which (A) is a partially enlarged view of the grain-oriented electrical steel sheet in plane view, (B) is a partially enlarged cross-sectional view of the grain-oriented electrical steel sheet as viewed from direction C, and (C-1) and (C-2) are partially enlarged cross-sectional views of the grain-oriented electrical steel sheet as viewed from direction L.

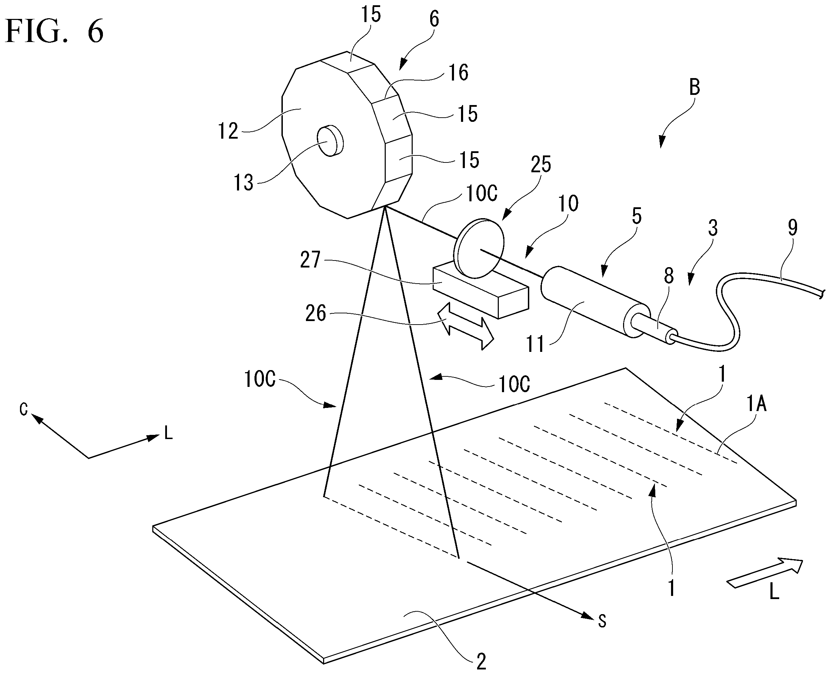

FIG. 6 is a perspective view showing a laser processing apparatus which is a grain-oriented electrical steel sheet manufacturing apparatus according to a second embodiment of the present invention and a grain-oriented electrical steel sheet being processed.

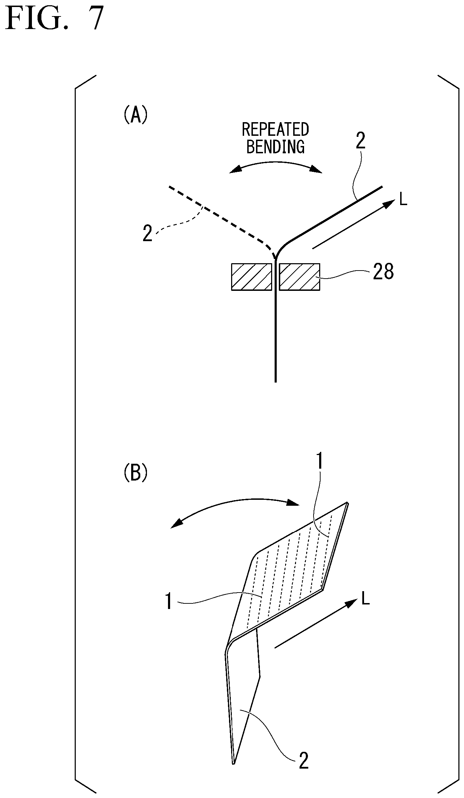

FIG. 7 is a view showing a fixing jig used when bending is repeatedly applied to a grain-oriented electrical steel sheet, in which (A) is a side view showing a state in which bending is repeatedly applied, and (B) is a perspective view showing a relationship between a grain-oriented electrical steel sheet to which bending is repeatedly applied and dot groove arrays.

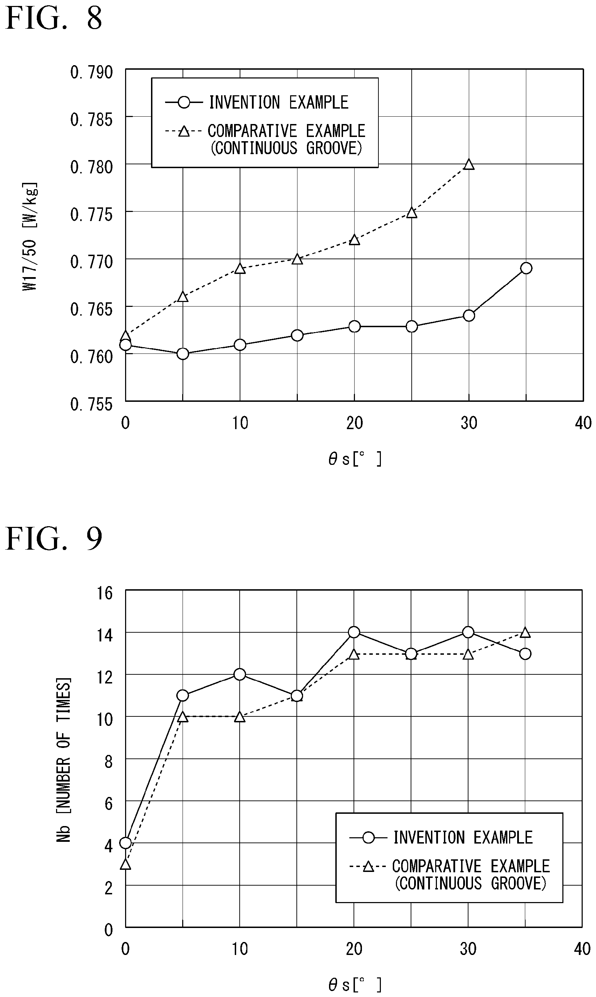

FIG. 8 is a diagram showing examples, and is a graph showing dependency of iron loss value (W17/50) of each of a grain-oriented electrical steel sheet of an invention example and a grain-oriented electrical steel sheet of a comparative example on a scanning angle θs formed by the scanning direction of a laser beam and the sheet width direction of the grain-oriented electrical steel sheet.

FIG. 9 is a diagram showing examples, and is a graph showing dependency of the number of bending times Nb of each of the grain-oriented electrical steel sheet of the invention example and the grain-oriented electrical steel sheet of the comparative example on a scanning angle θs formed by the scanning direction of a laser beam and the sheet width direction of the grain-oriented electrical steel sheet.

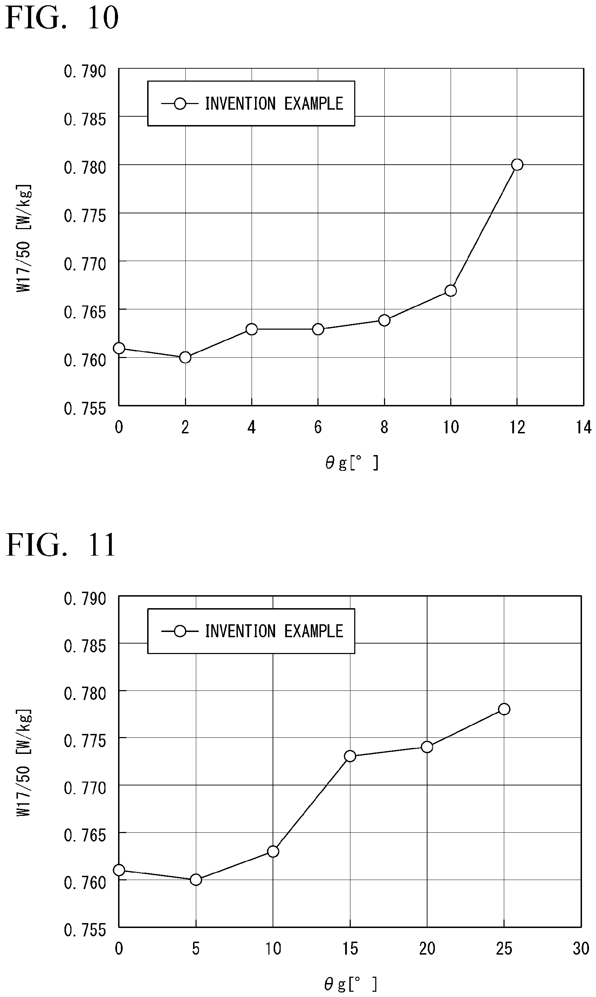

FIG. 10 is a diagram showing an example, and is a graph showing dependency of iron loss value (W17/50) of the grain-oriented electrical steel sheet of the invention example on an inclination angle θg formed by a direction of a major axis of a spotlight of the laser beam and the sheet width direction of the grain-oriented electrical steel sheet when the scanning angle θs has been set to 10°.

FIG. 11 is a diagram showing an example, and is a graph showing dependency of iron loss value (W17/50) of the grain-oriented electrical steel sheet of the invention example on an inclination angle θg formed by a direction of a major axis of a spotlight of the laser beam and the sheet width direction of the grain-oriented electrical steel sheet when the scanning angle θs has been set to 30°.

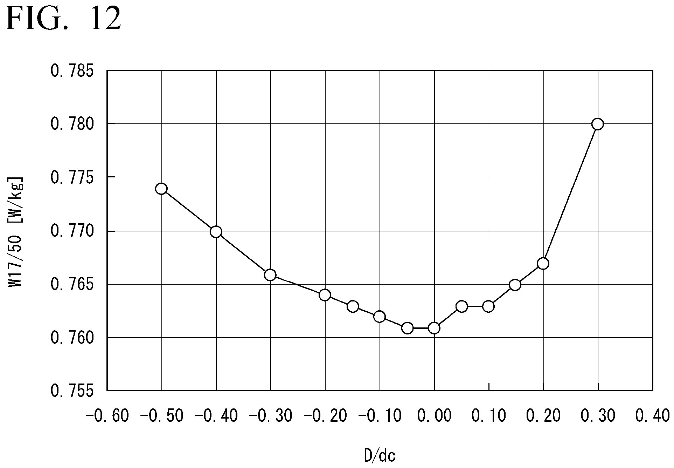

FIG. 12 is a diagram showing an example, and is a graph showing dependency of iron loss value (W17/50) of the grain-oriented electrical steel sheet of the invention example on D/dc when the scanning angle θs has been set to 10° and the inclination angle θg has been set to 0°.

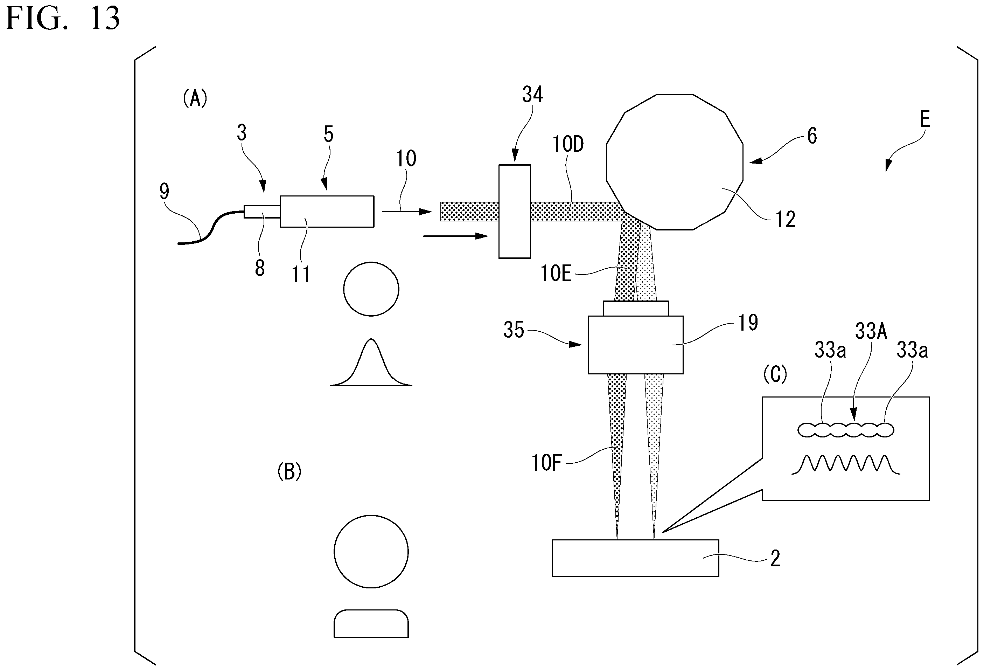

FIG. 13 is a side view showing a laser processing apparatus which is a grain-oriented electrical steel sheet manufacturing apparatus according to a third embodiment of the present invention and a grain-oriented electrical steel sheet being processed.

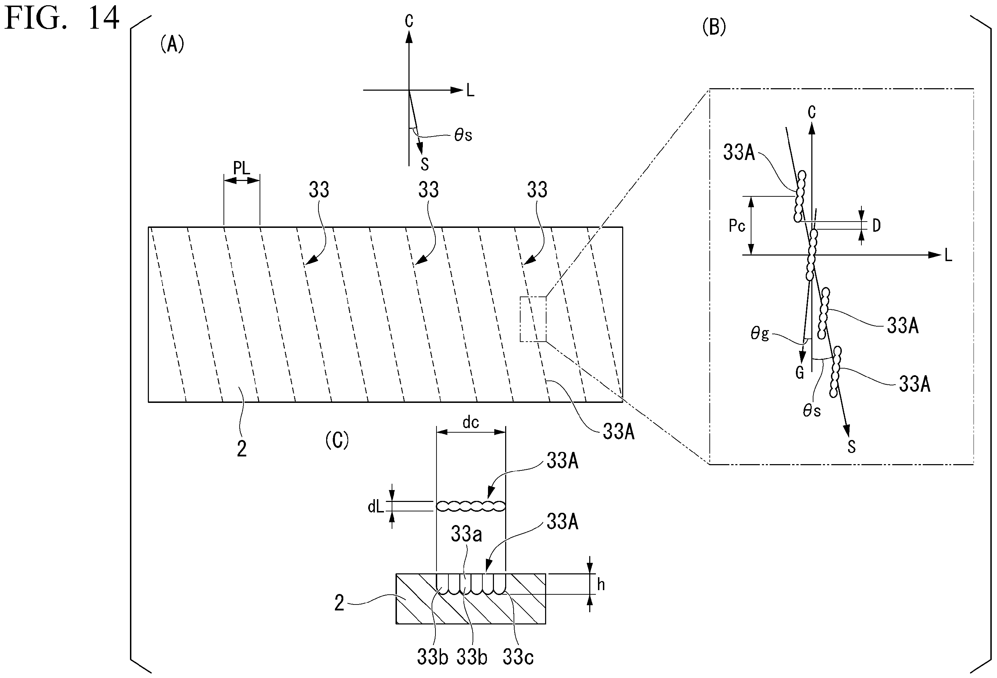

FIG. 14 is a view showing a grain-oriented electrical steel sheet including dot groove arrays formed by the laser processing apparatus of the third embodiment, in which (A) is a plane view of the grain-oriented electrical steel sheet, (B) is a partially enlarged view showing a dot groove array formed on an upper surface of the grain-oriented electrical steel sheet, and (C) is an explanatory view in which one of grouped dot grooves constituting the dot groove array is viewed in plane view and in cross-sectional view including a major axis of the dot groove and perpendicular to a steel sheet surface.

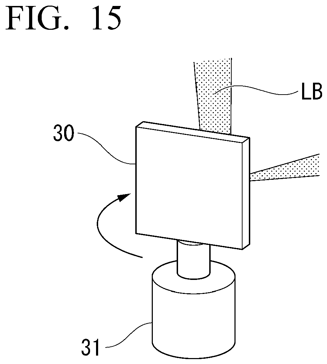

FIG. 15 is a perspective view showing an example of a galvanometer mirror used as a scanning mirror instead of a polygon mirror.

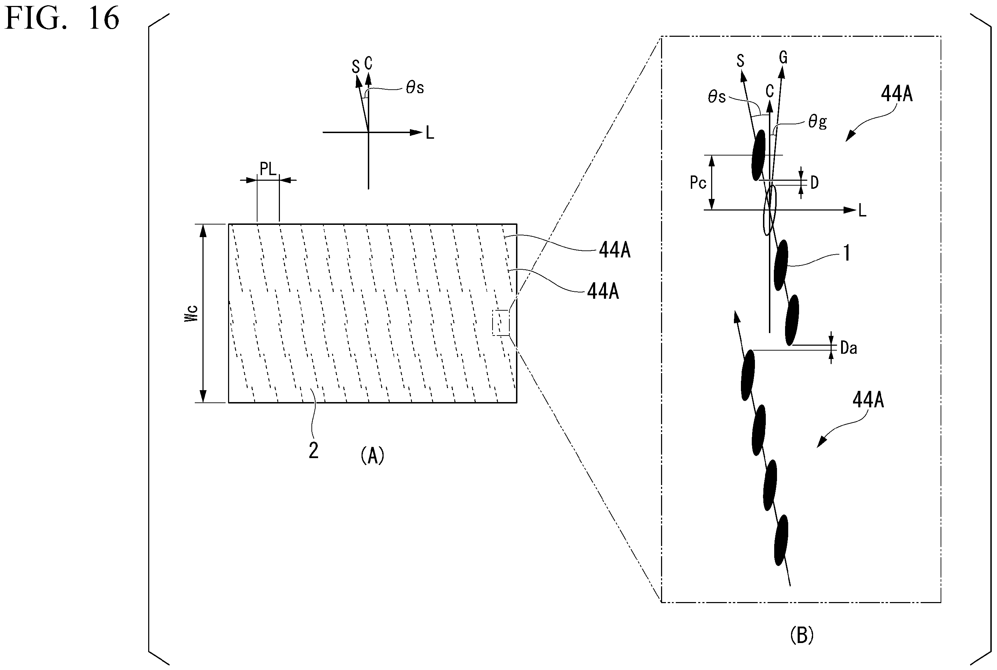

FIG. 16 is an explanatory view showing a case where dot groove arrays are formed by division in the sheet width direction in Example 4 of the present invention. That is, (A) is a plane view of the grain-oriented electrical steel sheet, and (B) is a partially enlarged view showing the dot groove arrays formed on an upper surface of the grain-oriented electrical steel sheet.

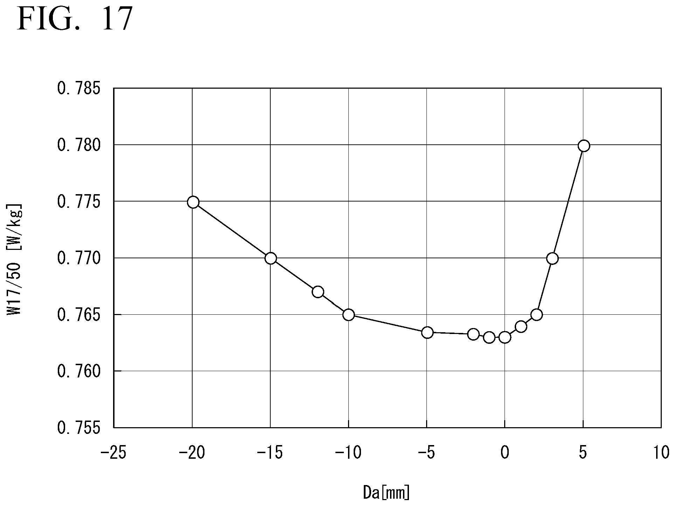

FIG. 17 is a graph showing dependency of iron loss value (W17/50) of the grain-oriented electrical steel sheet on distance between dot groove arrays adjacent to each other Da in Example 4 of the present invention.

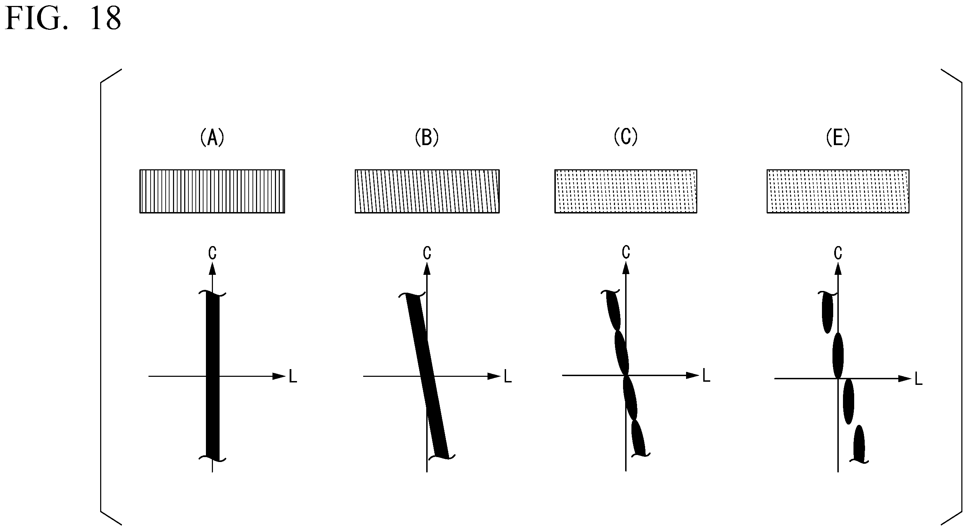

FIG. 18 is an explanatory view for comparing various groove patterns of the related art as comparative examples with a groove pattern of the present invention.

[Embodiment of the Invention]

Hereinafter, preferred embodiments of the present invention will be described with reference to the drawings.

Note that, in order to facilitate understanding of features, the drawings used in the following description may be emphatically shown, for example, by enlarging feature parts for convenience, and the like.

First, an outline of a grain-oriented electrical steel sheet which is an object to be processed in the present embodiment will be described.

<Outline of grain-oriented electrical steel sheet>

A typical grain-oriented electrical steel sheet is an electrical steel sheet in which the easy magnetization axis of grains of the steel sheet (<100> direction of a body-centered cubic crystal) are substantially aligned in the rolling direction of the steel sheet. The grain-oriented electrical steel sheet has a structure in which plural magnetic domains having magnetic poles oriented in the rolling direction are arranged with a magnetic domain wall interposed therebetween. Such a grain-oriented electrical steel sheet is easily magnetized in the rolling direction, and thus is suitable for a material of an iron core of a transformer in which the flow directions of lines of magnetic force are substantially constant.

A transformer is generally roughly classified into a stacked transformer and a wound transformer. The grain-oriented electrical steel sheet is suitably used as a material of a wound transformer iron core manufactured by winding steel sheets in multiple layers and then molding the steel sheets to have the shape of an iron core (for example, a quadrangular prism having a hollow portion).

The grain-oriented electrical steel sheet includes, for example, a steel sheet body (base metal), glass coating formed on both front and back surfaces of the steel sheet body, and an insulating coating formed on the glass coating. The steel sheet body is made of, for example, an iron alloy containing Si.

In order to reduce the iron loss (that is, for magnetic domain control) of the grain-oriented electrical steel sheet according to each embodiment of the present invention, the surface of the grain-oriented electrical steel sheet is irradiated with a laser beam, and scanning is performed in a direction obliquely intersecting the rolling direction (that is, the transport direction at the time of manufacturing, the longitudinal direction of the steel sheet) of the grain-oriented electrical steel sheet, thereby forming a dot groove array including a plurality of dot grooves having a minute circle or elliptical shape and extending in a direction intersecting the rolling direction of the grain-oriented electrical steel sheet. The plural dot groove arrays are formed on the surface of the grain-oriented electrical steel sheet at predetermined intervals along the rolling direction. In the following description, the grain-oriented electrical steel sheet may be simply described as the steel sheet.

FIG. 1 shows a grain-oriented electrical steel sheet 2 according to the first embodiment in which dot groove arrays 1 are formed on a surface thereof. FIG. 2 shows a laser processing apparatus A which is an example of a grain-oriented electrical steel sheet manufacturing apparatus for processing a grain-oriented electrical steel sheet 2.

<Detail of grain-oriented electrical steel sheet>

The grain-oriented electrical steel sheet 2 is an electrical steel sheet to be subjected to groove formation, and is cold-rolled into a strip with a sheet width Wc. However, in FIGS. 1(A) and 2, in order to simplify the illustration, the strip-shaped grain-oriented electrical steel sheet 2 is drawn in a rectangular shape, and a direction orthogonal to rolling direction L is indicated as a sheet width direction C. The grain-oriented electrical steel sheet 2 is passed in the rolling direction L by a transportation device (not illustrated).

The plural dot groove arrays 1 shown in FIG. 1(A) formed in the grain-oriented electrical steel sheet 2 have a plane view shape as shown in FIG. 1(B) in an enlarged manner. Each of the dot groove arrays 1 has a predetermined length (a length in the major axis direction of the groove part: dc), a groove width (a length in the minor axis direction of the groove part: dL), and a groove depth (a maximum depth of the groove part: h), and is formed to appear as one dot groove array 1 in a macroscopic view by arranging a plurality of dot grooves 1A having a substantially elliptical shape in plane view linearly in plane view. As shown in FIG. 1(B), center portions of the dot grooves 1A in the major axis direction are arranged at regular intervals along a dot groove array direction S (a scanning direction S described later), thereby forming a plurality of dot groove arrays 1.

Further, each dot groove array 1 is formed such that an angle formed by a direction G of the major axis of each dot groove 1A constituting the dot groove array 1 with respect to the sheet width direction C of the grain-oriented electrical steel sheet 2 is an inclination angle $\theta g$, and an angle formed by the dot groove array direction S and the sheet width direction C of the steel sheet is a scanning angle $\theta s$. That is, the direction G of the major axis of each dot groove 1A constituting the dot groove array 1 is a direction different from the dot groove array direction S.

Note that the sign of the inclination angle θg is a positive value in a case where the right hand side of the major axis of the dot groove 1A on the paper surface is inclined to the upstream side in the transport direction when the downstream side in the transport direction is viewed. In addition, the sign of the scanning angle θs is a positive value in a case where the right hand side of the dot groove array direction S on the paper surface is inclined to the downstream side in the transport direction when the downstream side in the transport direction is viewed.

The dot groove 1A has a substantially elliptical shape in plane view, and has a maximum groove width (a length in the minor axis direction of the dot groove 1A) dL at a center position from one end side to the other end side in the length direction. Each of a one end portion 1a and other end portion 1b of the dot groove 1A has an inner surface 1c with a concave curved surface in plane view. Portions of the dot groove 1A excluding the one end portion 1a and the other end portion 1b are formed with inside surfaces 1d facing each other. Also, as shown in FIG. 1(C), a bottom surface 1e with a maximum depth h is formed on the bottom surface side of the dot groove 1A. The bottom surfaces of the one end portion 1a and the other end portion 1b of the dot groove 1A are formed with a concave curved inclined surface 1f whose bottom gradually becomes shallower near the end portion. Here, the inside surface 1d may be a plane, and in this case, the dot groove 1A can be regarded as a short linear groove in plane view. On the other hand, in the illustrated example, the inside surface 1d has an arc shape, and thus the dot groove 1A can be regarded as a groove with a short substantially elliptical shape in plane view.

For example, as shown in FIG. 1(B), the dot groove 1A is formed such that an interval D along the sheet width direction C of the pair of dot grooves 1A adjacent to each other is constant. In addition, the dot groove 1A is formed such that an interval Pc along the sheet width direction C of the center portion in the length direction of the dot grooves 1A adjacent to each other is constant. That is, the plural dot grooves 1A are individually arranged in parallel so as to be gradually displaced at a constant pitch along the dot groove array direction S, thereby forming a dot groove array 1. Also, as shown in FIG. 1(A), the plural dot groove arrays 1 are repeatedly formed at a predetermined pitch PL in the rolling direction L of the grain-oriented electrical steel sheet 2.

The dot groove array direction S in which the dot groove array 1 is formed is a direction in which a laser beam is scanned by the laser processing apparatus A described later. Therefore, the dot groove array direction S can also be described as the scanning direction S of a laser beam.

The dot groove array 1 is formed by a laser beam as described later. Therefore, as shown in FIG. 1(B), the dot groove array 1 has a configuration in which the plural dot grooves 1A of the same shape are regularly arranged, but it is not necessary that all the dot grooves 1A are formed in the completely same shape depending on the irradiation state of the laser beam, and the end portion shape and the bottom portion shape of the dot grooves 1A are irregular, and may be slightly different from the shapes shown in FIGS. 1(B) and 1(C).

When the grain-oriented electrical steel sheet 2 is viewed in plane view as shown in FIG. 1(A), the dot groove array 1 in which the dot grooves 1A are intermittently arranged as shown in FIG. 1(B) preferably has the following relationships (Formula 1) to (Formula 3), when an inclination angle formed by the direction G of the major axis of the dot groove 1A on the steel sheet surface and the sheet width direction C of the steel sheet is denoted by θg [°], and a scanning angle formed by the scanning direction S and the steel sheet width direction C is denoted by θs [°].

$$0° \leq |\theta g| \leq 10° \cdots \text{(Formula 1)}$$

$$0° < |\theta s| \leq 30° \cdots \text{(Formula 2)}$$

$$|\theta g| \leq |\theta s| \cdots \text{(Formula 3)}$$

As shown in FIG. 1(B), in the dot groove array 1, when the length in the major axis direction of the dot groove 1A is denoted by dc [μm] and the interval of the adjacent dot grooves 1A along the sheet width direction C of the steel sheet is denoted by D [μm], it is preferable to have the following relationship (Formula 4). The interval D [μm] is 0 [μm] in a case where the dot grooves 1A adjacent to each other are in contact with each other when viewed along the rolling direction L, and the sign was set to be a positive value in a case where the dot grooves 1A are separated from each other, and a negative value in a case where the dot grooves 1A overlap each other.

$$-0.3 \leq (D/dc) \leq 0.2 \cdots \text{(Formula 4)}$$

In the dot groove array 1, when the length in the major axis direction of the dot groove 1A is denoted by dc [μm] and the length in the minor axis direction of the dot groove 1A is denoted by dL [μm], it is preferable to have the following relationships (Formula 5) and (Formula 6). Furthermore, dc [μm] ≤ 30000 [μm] is preferably satisfied.

$$10 \ \mu m \le dL \le 300 \ \mu m \cdots \text{(Formula 5)}$$

$$dL \le dc \cdots \text{(Formula 6)}$$

In the dot groove array 1, when the maximum depth of the dot groove 1A is h [$\mu$m], it is preferable to have the following relationship (Formula 7).

$$5 \ \mu m \le h \le 100 \ \mu m \cdots \text{(Formula 7)}$$

In the plurality of dot groove arrays 1 arranged in the longitudinal direction of the grain-oriented electrical steel sheet 2, when the interval of the adjacent dot grooves 1A along the longitudinal direction of the steel sheet is PL [$\mu$m], it is preferable to have the following relationship (Formula 8).

$$1 \ mm \le PL \le 10 \ mm \cdots \text{(Formula 8)}$$

In addition, as shown in FIG. 16, when the width dimension of the grain-oriented electrical steel sheet 2 is wide, dot groove arrays 44A divided into a plurality of portions in the width direction may be adopted. In general, since the sheet width Wc when the electrical steel sheet is manufactured into a coil shape by a continuous manufacturing line of the electrical steel sheet is 1000 mm to 1500 mm, the length of one dot groove array 44A may be set to 100 mm to 500 mm to form dot groove arrays 44A divided into 2 to 10 grooves. In this case, when the interval of the dot groove arrays 44A adjacent to each other along the sheet width direction C is Da [mm], it is preferable to have the following relationship (Formula 9). When the interval Da is a negative value, it means that the dot groove arrays 44A adjacent to each other overlap in the sheet width direction. That is, the interval Da [mm] is a positive value in a case where the end portions do not overlap each other in the line of sight viewed along the rolling direction, 0 [$\mu$m] in a case where the end portions are in contact with each other at one point, and a negative value in a case where the end portions overlap each other.

$$-10 \ mm \le Da \le 5 \ mm \cdots \text{(Formula 9)}$$

The description returns to FIG. 1.

In the grain-oriented electrical steel sheet 2 shown in FIG. 1, since the dot groove arrays 1 are formed intermittently at intervals PL in the steel sheet longitudinal direction and along the scanning direction S having a predetermined scanning angle $\theta$s with respect to the sheet width direction C, the grain-oriented electrical steel sheet 2 is excellent in resistance to mechanical repeated bending. Therefore, even when the grain-oriented electrical steel sheet 2 is wound or bent for use as a wound iron core for a transformer, there is little possibility of fracture, and it is possible to provide the grain-oriented electrical steel sheet 2 that does not cause a defect such as a crack.

The dot groove 1A constituting the dot groove array 1 is a minute circular or substantially elliptical groove having a length of about several 10 $\mu$m to 1 mm. The elliptical length may be further increased, but in this case, the number of the dot grooves 1A occupying the sheet width decreases. For example, a typical small transformer iron core has a sheet width of about 100 mm, but when the width of the dot groove 1A is 30 mm, the number of the dot grooves 1A is 3 to 4 in the sheet width, and the number is extremely small. In this case, since uniformity of the magnetic flux density in the entire steel sheet decreases, iron loss may increase. Therefore, the major axis length of the dot groove 1A is preferably about 30 mm at the maximum. The individual dot grooves 1A are formed in substantially parallel (including an inclination of 0° to 10°) along the sheet width direction C. Therefore, the magnetic domain refinement effect in the grain-oriented electrical steel sheet 2 can be exhibited to the maximum, and it is possible to provide the grain-oriented electrical steel sheet 2 with maximized iron loss reduction effect. In addition, even if the individual dot grooves 1A have the inclination angle $\theta$g with respect to the sheet width direction C, the magnetic domain refinement effect is not impaired since the inclination angle $\theta$g is as small as 10° or less.

Further, since a gap is generated between the individual dot grooves 1A adjacent to each other, the magnetic flux can pass through the gap while changing the direction of the magnetic flux vector, so that the reduction margin of the magnetic flux density is small. Also in the cross-sectional direction, since the groove depth is shallow between the dot grooves adjacent to each other, the deterioration margin of the magnetic flux density on the steel sheet surface is small. Furthermore, since the gap between the dot grooves 1A adjacent to each other is as small as 10 $\mu$m to 1 mm, and a large number of the gaps are uniformly formed along the sheet width direction C, uniform iron loss and magnetic flux density can be obtained in the sheet width direction C.

<Laser processing apparatus>

FIG. 2 is a perspective view showing a laser processing apparatus A of the first embodiment used to form dot grooves 1A on a grain-oriented electrical steel sheet 2.

The laser processing apparatus A is an apparatus that irradiates a surface of a grain-oriented electrical steel sheet 2 with a pulsed laser beam to form dot groove arrays 1 including discrete substantially elliptical shaped dot grooves 1A extending in a direction intersecting the sheet width direction C of the grain-oriented electrical steel sheet 2.

The laser processing apparatus A includes a laser irradiation unit 3, a first optical system 5, a scanning mirror 6, and a second optical system 7.

The laser irradiation unit 3 includes a laser emission unit 8 and a transmission fiber 9, and the transmission fiber 9 is connected to a laser beam source (not illustrated). With this configuration, a laser beam generated by the laser beam source can be sent to the laser emission unit 8, and the laser beam can be emitted from the laser emission unit 8.

As the laser beam source, a fiber laser or a disk laser in a pulsed oscillation form is preferably used from the viewpoint of forming a dot groove array or the like. However, it is only necessary to obtain a dot groove array part, and various known pulsed laser beam sources such as a YAG laser and a $CO_2$ laser may be used. Further, the laser beam source may not be a pulsed oscillation laser, and a continuous wave laser may be used in a pulsed form by an optical shutter that opens and closes temporally.

The laser beam has high energy, and by irradiating the surface of the grain-oriented electrical steel sheet 2 with the laser beam, a groove part can be formed by melting and scattering the surface part of the grain-oriented electrical steel sheet 2.

When the laser beam is emitted as a laser beam 10 from the laser emission unit 8 via the first optical system 5, the cross-sectional shape orthogonal to the optical axis is elliptical or linear. The first optical system 5 is, as an example, a so-called elliptical beam collimator including a combination of a cylindrical lens, a paraboloid lens, or a paraboloid mirror, and having a function of changing the cross-sectional shape of the laser beam into an elliptical shape. The elliptical beam collimator has a function of adjusting the direction of the major axis of the ellipse formed by a spotlight of the laser beam emitted through the first optical system 5 by rotating about the laser beam axis.

In the configuration shown in FIG. 2, as an example, a cylindrical lens collimator (elliptical collimator) 11 including a combination of concave and convex cylindrical lenses is disposed on the emission side of the laser emission unit 8 to configure the first optical system 5. The laser emission unit 8 and the cylindrical lens collimator 11 are horizontally disposed above the grain-oriented electrical steel sheet 2 being transported along the width direction of the grain-oriented electrical steel sheet 2. The cylindrical lens collimator 11 included in the first optical system 5 has a function of converting the beam cross-sectional shape into an elliptical shape and rotating about the optical axis of the laser beam 10 as a central axis. By the rotation of the cylindrical lens collimator 11, the elliptical spotlight irradiated onto the grain-oriented electrical steel sheet 2 is rotated about the laser beam axis, and the direction of the major axis direction of the ellipse is adjusted.

After the laser beam transmission through the cylindrical lens collimator 11, a polygon mirror 12 used as the scanning mirror 6 is provided. The scanning mirror 6 may be a galvanometer mirror.

The scanning mirror 6 reflects the laser beam adjusted by the first optical system 5 to change the traveling direction of the laser beam, and can move the position on the grain-oriented electrical steel sheet 2 irradiated with the spotlight of the laser beam along the scanning direction S that is a direction intersecting the width direction of the grain-oriented electrical steel sheet 2. That is, the scanning angle θs can be adjusted in the scanning direction of the polygon mirror 12.

When the shape of the spotlight irradiated to the surface of the grain-oriented electrical steel sheet 2 is elliptical, the directions of the minor axis and the major axis passing through the center of the spotlight and orthogonal to each other can be defined.

Further, the shape of the spotlight may be precisely circular.

By rotating the polygon mirror 12 every moment or changing the inclination angle in the case of a galvanometer mirror in accordance with the irradiation of the laser beam 10, the direction of irradiating the laser beam can be changed. The laser beam 10A reflected by the polygon mirror 12 is directed to the second optical system 7 described later.

The second optical system 7 has a function of forming a pulsed laser beam 10B condensed by transmitting the laser beam 10A reflected by the scanning mirror 6 and then condensing the pulsed laser beam 10B on the surface of the grain-oriented electrical steel sheet 2.

As shown in FIG. 2, the polygon mirror 12 is a flat regular polygonal prism with a regular polygonal shape when viewed from the side in the direction of a rotation shaft 13. The polygon mirror 12 has the rotation shaft 13 extending in the horizontal direction, and rotates about the rotation shaft 13.

The outer circumferential surface of the polygon mirror 12 is formed by a plurality of rectangular reflecting surfaces 15 forming respective surfaces of the regular polygon of the polygon mirror 12 and corner portions 16 formed by the reflecting surfaces 15. Each reflecting surface 15 is a planar mirror that reflects laser beam. Assuming that the number of reflecting surfaces 15 is N, the polygon mirror 12 is a regular N-prism. In the configuration shown in FIG. 2, the polygon mirror 12 is a regular 12-prism, and N (the number of reflecting surfaces 15) is 12.

By rotating the polygon mirror 12 about the rotation shaft 13, the reflection angle of the reflecting surface 15 can be continuously changed, and as a result, the laser beam 10A is scanned in the direction S.

The second optical system 7 includes an $f\theta$ lens (scanning lens) 19.

The second optical system 7 condenses the laser beam 10A incident on the $f\theta$ lens 19 from the polygon mirror 12 as the pulsed laser beam 10B to irradiate the surface of the grain-oriented electrical steel sheet 2. The condensed pulsed laser beam 10B melts and evaporates and scatters the surface of the grain-oriented electrical steel sheet 2 to form dot grooves 1A on the surface of the grain-oriented electrical steel sheet 2.

The second optical system 7 is provided to condense the pulsed laser beam 10B on the surface of the grain-oriented electrical steel sheet 2. In order to condense the pulsed laser beam 10B on the surface of the grain-oriented electrical steel sheet 2, it is preferable to appropriately adjust focal length and mutual interval between the cylindrical lens collimator 11 and the $f\theta$ lens 19. The scanning direction S of the pulsed laser beam 10B with respect to the surface of the grain-oriented electrical steel sheet 2 is equal to the above-described dot groove array direction S, and the scanning direction S is inclined by the scanning angle $\theta$s with respect to the sheet width direction C.

Note that, even if a flat field lens is used in place of the $f\theta$ lens 19 in the second optical system 7, it is possible to exert a similar function. In addition, it is also possible to exert the similar function using a paraboloid mirror which is a reflection type beam condensing unit.

In the present embodiment, the pulsed laser beam 10B is condensed on the surface of the grain-oriented electrical steel sheet 2 so that a precisely circular or elliptical spotlight is formed. Then, by the condensed pulsed laser beam 10B, plural dot grooves 1A having an inclination angle $\theta$g of about 0° to 10° with respect to the sheet width direction C are formed at regular intervals along the dot groove array direction S having a scanning angle $\theta$s inclined at about 30° or less with respect to the sheet width direction C as shown in FIG. 1(B).

Since the grain-oriented electrical steel sheet 2 is transported at a constant speed in the direction of an arrow L in FIG. 2, the dot groove arrays 1 can be intermittently and continuously formed at regular intervals PL (see FIG. 1(A)) in the rolling direction L by appropriately adjusting the scanning speed and the pulse time width of the pulsed laser beam 10B and the time interval between pulses.

The reason why the groove part is formed in the surface of the grain-oriented electrical steel sheet 2 at a scanning angle $\theta$s of about 30° or less is as follows. As previously described, this is because, when a wound transformer iron core is manufactured using the grain-oriented electrical steel sheet 2, the magnetic characteristics of the grain-oriented electrical steel sheet 2 are improved by forming the dot groove arrays 1, and at the same time, fracture and cracks of the grain-oriented electrical steel sheet 2 are prevented. The scanning angle $\theta$s may be a small angle of 10° or less. However, when the scanning angle $\theta$s is close to 0°, it is considered that fracture may occur at the time of manufacturing the wound transformer iron core. Therefore, it is desirable to avoid an angle close to 0°.

The diameter in the minor axis direction of the ellipse formed by the spotlight of the pulsed laser beam 10B immediately before irradiating the grain-oriented electrical steel sheet 2 can be set to, for example, about several 10 $\mu$m. In addition, the major axis of the ellipse can be set to a value of, for example, 30 mm or more from the equivalent of the minor axis length. By adjusting the lengths of the major axis and the minor axis of such elliptical spotlight to condense the spotlight, the dot grooves 1A can be formed on the surface of the grain-oriented electrical steel sheet 2. The shape of the dot groove 1A formed here is a substantially elliptical shape intersecting the sheet width direction by $\theta$g depending on the condensing spot shape, the inclination of the spot, the pulse time width, and the scanning speed. The interval between the dot grooves 1A is adjusted by the repetition frequency of the pulse and the scanning speed.

FIG. 2 shows an example of an elliptical spotlight SP drawn on the surface of the grain-oriented electrical steel sheet 2 when the steel sheet surface is irradiated with the above-described pulsed laser beam 10B. The major axis direction of the spotlight SP is adjusted to be inclined with respect to the sheet width direction C by rotation of the cylindrical lens collimator 11 included in the first optical system 5. Further, since the scanning direction S is a direction orthogonal to the rotation shaft 13 of the scanning mirror 6, the scanning angle $\theta$s can be set to an arbitrary angle with respect to the sheet width direction C by adjusting the rotation shaft 13, the first optical system 5, and the laser emission unit 8. As a result, the dot groove array 1 is formed in which the substantially elliptical dot grooves 1A having the major axis dc and the minor axis dL and the major axis inclined at the angle $\theta$g from the sheet width direction C are arranged in the direction inclined at the angle $\theta$s from the sheet width direction C. Here, the angle $\theta$g and the angle $\theta$s can be adjusted independently and arbitrarily.

Here, a process of forming the dot groove 1A with a substantially elliptical shape will be described. FIG. 1(D) is an enlarged view of one substantially elliptical dot groove 1A in the present embodiment. FIG. 1(E) is a view for explaining that the dot groove 1A is formed by movement of the elliptically condensed spotlight in the direction S. In a case where the pulse time width of the pulsed laser is Tp, when the spotlight is scanned in the direction S at a speed Vs, the spotlight moves from E1 to E2 within the pulse time. Moving distance a at that time is obtained by $a = Vs \times Tp$.

In the elliptical spotlight, an elliptical major axis direction thereof is a G2 direction inclined by an angle $\theta$g2 from the sheet width direction C, by rotating and adjusting the cylindrical lens collimator 11. The shape of the dot groove 1A formed coincides with the shape of the outermost periphery of locus moved from the elliptical spot E1 to the elliptical spot E2, and is substantially elliptical. At this time, the length of the major axis dc of the dot groove 1A is a distance between a lower major axis vertex P3 of the elliptical spot E1 and an upper vertex P2 of the moved elliptical spot E2 in FIG. 1(E). Also, the minor axis dL of the dot groove 1A is the maximum width in the direction orthogonal to the straight line connecting P2 and P3, and is the distance between a point Q1 and a point Q2.

In addition, the interval Pc [mm] of the dot grooves 1A adjacent to each other in the sheet width direction C, the interval PL [mm] in the rolling direction L, and the interval D [μm] between the dot grooves 1A adjacent to each other are defined as the following (Formula 10) to (Formula 12) by a repetition frequency Fp [Hz] of the pulsed laser beam, the scanning speed Vs [m/s] of the pulsed laser beam 10B, the number of surfaces N [-] of the scanning mirror 6, a focal length f [m] of the fθ lens 19, and a passing speed VL [m/s] of the grain-oriented electrical steel sheet 2. By adjusting these parameters, PL, Pc, and D can be appropriately selected, and the plurality of dot grooves 1A shown in FIG. 1(B) can be freely formed.

$$Pc = Vs/Fp \times \cos\theta s \times 10^3 \cdots \text{(Formula 10)}$$

$$PL = (4\pi/N) \times f \times VL/Vs \times 10^3 \cdots \text{(Formula 11)}$$

$$D = Pc \times 10^3 - dc \times \cos\theta g \cdots \text{(Formula 12)}$$

The gist of the laser processing apparatus A described above will be summarized below.

The laser processing apparatus A shown in FIG. 2 is a processing apparatus that forms the dot groove array 1 including the plurality of dot grooves 1A having the shapes shown in FIGS. 1(A) to 1(C).

In the laser processing apparatus A, the first optical system 5 adjusts the direction G of the major axis of the ellipse formed by the spotlight of the pulsed laser beam 10B on the surface of the grain-oriented electrical steel sheet 2 in a direction different from the scanning direction S (preferably, in the direction along the sheet width direction C of the grain-oriented electrical steel sheet 2).

The second optical system 7 forms the dot groove array 1 on the surface of the grain-oriented electrical steel sheet 2 by forming the dot grooves 1A on the surface of the grain-oriented electrical steel sheet 2 for each spotlight of the pulsed laser beam 10B condensed on the surface of the grain-oriented electrical steel sheet 2.

Therefore, when the inclination angle formed by the direction G of the major axis of the ellipse formed by the spotlight of the pulsed laser beam 10B condensed on the surface of the grain-oriented electrical steel sheet 2 and the sheet width direction C of the steel sheet is θg [°], and the scanning angle formed by the scanning direction S and the sheet width direction C of the steel sheet is θs [°], the laser processing apparatus A can be described as an apparatus for processing such that the following (Formula 13) to (Formula 15) are established.

$$0° \leq |\theta g| \leq 10° \cdots \text{(Formula 13)}$$

$$0° < |\theta s| \leq 30° \cdots \text{(Formula 14)}$$

$$|\theta g| \leq |\theta s| \cdots \text{(Formula 15)}$$

When the length in the major axis direction of the ellipse formed by the spotlight of the pulsed laser beam 10B condensed on the surface of the grain-oriented electrical steel sheet 2 is dc [μm], and the interval along the sheet width direction of the grain-oriented electrical steel sheet 2 of the dot grooves 1A adjacent to each other among the dot grooves 1A formed for each spotlight of the laser beam condensed on the surface of the grain-oriented electrical steel sheet 2 is D [μm], the laser processing apparatus A can be described as an apparatus for processing such that the following (Formula 16) is established.

$$-0.3 \leq (D/dc) \leq 0.2 \cdots \text{(Formula 16)}$$

When the length in the major axis direction of the ellipse formed by the spotlight of the pulsed laser beam 10B condensed on the surface of the grain-oriented electrical steel sheet 2 is dc [μm], and the length in the minor axis direction of the ellipse formed by the spotlight of the pulsed laser beam 10B condensed on the surface of the grain-oriented electrical steel sheet 2 is dL [μm], the laser processing apparatus A can be described as an apparatus for processing such that the following (Formula 17) and (Formula 18) are established.

$$10 \ \mu m \leq dL \leq 300 \ \mu m \cdots \text{(Formula 17)}$$

$$dL \leq dc \cdots \text{(Formula 18)}$$

When the maximum depth of the dot grooves 1A formed for each spotlight of the pulsed laser beam 10B condensed on the surface of the steel sheet is h [$\mu$m], the laser processing apparatus A can be described as an apparatus for processing such that the following (Formula 19) is established.

$$5 \ \mu m \leq h \leq 100 \ \mu m \cdots \text{(Formula 19)}$$

When the interval along the longitudinal direction of the ellipse formed by the spotlight of the pulsed laser beam 10B condensed on the surface of the grain-oriented electrical steel sheet 2 is PL [mm], the laser processing apparatus A can be described as a laser processing apparatus for processing such that the following (Formula 20) is established.

$$1 \ mm \leq PL \leq 10 \ mm \cdots \text{(Formula 20)}$$

In a case where the sheet width direction C is divided into two or more sections to form two or more dot groove arrays 1 including the dot grooves 1A using the laser processing apparatus A, when the interval between the dot groove arrays 1 adjacent to each other is Da [mm], the laser processing apparatus A can be described as a laser processing apparatus for processing such that the following (Formula 21) is established. When the interval Da [mm] is a negative value, it means that the dot groove arrays 1 adjacent to each other overlap in the sheet width direction. That is, the interval Da [mm] is a positive value in a case where the end portions do not overlap each other in the line of sight viewed along the rolling direction, 0 [$\mu$m] in a case where the end portions are in contact with each other at one point, and a negative value in a case where the end portions overlap each other.

$$-10 \ mm \leq Da \leq 5 \ mm \cdots \text{(Formula 21)}$$

<Laser processing method according to first embodiment>

Next, a grain-oriented electrical steel sheet manufacturing method for processing the dot groove arrays 1 in the grain-oriented electrical steel sheet 2 by the above-described laser processing apparatus A includes the following steps.

That is, this grain-oriented electrical steel sheet manufacturing method includes a laser irradiation step of irradiating a laser beam using the laser irradiation unit 3.

In addition, this grain-oriented electrical steel sheet manufacturing method includes a first optical processing step of adjusting the spotlight of the laser beam into an elliptical shape and adjusting the direction of the major axis of the ellipse formed by the spotlight of the laser beam using the first optical system 5.

Further, this grain-oriented electrical steel sheet manufacturing method includes a scanning processing step of reflecting the laser beam 10 adjusted by the first optical system 5 to change the traveling direction of the laser beam 10 and moving the position on the steel sheet surface irradiated with the spotlight of the laser beam 10 along the scanning direction S that is a direction intersecting the sheet width direction C of the grain-oriented electrical steel sheet 2 using the scanning mirror 6.

Furthermore, this grain-oriented electrical steel sheet manufacturing method includes a second optical processing step of transmitting the laser beam 10A reflected by the scanning mirror 6 and condensing the laser beam on the steel sheet surface using the second optical system 7.

In the first optical processing step, the direction G2 of the major axis of the ellipse formed by the spotlight of the pulsed laser beam 10B on the surface of the grain-oriented electrical steel sheet 2 is adjusted in a direction different from the scanning direction S.

Further, in the second optical processing step, the dot groove array 1 is formed on the steel sheet surface by forming groove parts on the steel sheet surface for each spotlight of the pulsed laser beam 10B condensed on the steel sheet surface.

<Principle of development of iron loss, resistance to repeated bending workability, and effect of suppressing decrease in magnetic flux density>

For the grain-oriented electrical steel sheet 2 shown in FIG. 1 described above, the principle of development of magnetic domain control effect will be described below.

FIG. 3(A) is a schematic enlarged view of a grain-oriented electrical steel sheet 2 on which dot grooves 1A are formed in the present embodiment. FIG. 3(B) is a schematic cross-sectional view of the groove part forming region as viewed from the direction C. Also, FIGS. 3(C-1) and 3(C-2) are schematic cross-sectional views of the groove part forming region as viewed from the direction L. FIG. 3(C-1) is a cross-sectional view at a position where no groove is formed, and FIG. 3(C-2) is a cross-sectional view along a portion where the grooves are formed. In FIG. 3, the directions of magnetic fluxes generated in the grain-oriented electrical steel sheet 2 are indicated by arrows. In addition, the size of the circle described in the cross section in the direction L represents the magnitude of the magnetic flux density.

FIGS.4(A), 4(B), 4(C-1), and 4(C-2) are a schematic enlarged view of a surface showing a conventional configuration in which grooves 21 are continuously formed on the surface of the grain-oriented electrical steel sheet 20 in a direction substantially perpendicular to the rolling direction L, that is, substantially parallel to the sheet width direction C, and schematic cross-sectional views in the directions C and L.

FIG. 5 shows cross-sectional views of a conventional configuration in which grooves 22 are continuously formed so as to be inclined by more than 0° from the sheet width direction C direction as viewed from the same line of sight as in FIGS. 3 and 4.

First, with respect to a case of a continuous groove which is an example of the related art, magnetic characteristics and mechanical strength will be described with reference to FIG. 4. When a magnetic field is applied in the rolling direction L, which is an easy magnetization direction of the grain-oriented electrical steel sheet, a magnetic flux density B (T) is generated in the same direction as indicated by arrows in FIG. 4. At this time, as shown in the cross section of the steel sheet in FIG. 4(B), when the groove 21 which is a gap is present in the surface layer, due to a difference in magnetic permeability between air and a base metal, a part of the magnetic flux leaks into the gap in the side wall of the groove 21, and a change in the flow direction of the magnetic flux in which a part of the leaked magnetic flux infiltrates into the steel sheet occurs. As a result, magnetostatic energy locally increases due to the change in the magnetic flux, and the number of surrounding magnetic domain walls increases in order to alleviate the uneven distribution of the energy. As a result, it is considered that a spatial energy equilibrium state is maintained. Since the magnetic domain wall is a boundary between the magnetic domains, the increase in the number of magnetic domain walls in the same volume corresponds to a decrease in the width of the magnetic domain.

The abnormal eddy-current loss, which is one component of the iron loss, has a positive correlation with the magnetic domain width. Therefore, the magnetic domain width is narrowed, thereby the iron loss is reduced. In other words, it can be said that the iron loss is reduced by forming the groove 21 serving as a barrier against the flow direction of the magnetic flux. This barrier effect is the highest when grooves are formed in a direction orthogonal to the magnetic flux direction, and the iron loss reduction effect is high.

Incidentally, W17/50, which is an index of iron loss evaluation, is an iron loss value when the steel sheet is forcibly magnetized so as to generate a magnetic flux density of 1.7 T on average. Although the magnetic flux is less likely to be generated by the groove, the area percentage of the portion where the groove is formed in the entire steel sheet is small. Therefore, there is almost no difference in the magnetizing force for generating a magnetic flux of 1.7 T depending on the presence or absence of the groove, and the magnetic flux density at the portion without the groove is also 1.7 T. This is a uniform magnetic flux density in the cross section of the steel sheet as schematically shown in FIG. 4(C-1). However, since the cross-sectional area through which the magnetic flux can pass is narrowed in the lower portion of the groove, continuity of the magnetic flux flow is maintained, and as a result, the magnetic flux density in the lower portion of the groove locally increases as shown in FIG. 4(C-2). Since the iron loss is proportional to the square of the magnetic flux density, the iron loss in the lower portion of the groove increases.

Therefore, in the subtraction of the iron loss decrease due to the magnetic domain width phenomenon and the iron loss increase due to the local increase in the magnetic flux density, the former has a larger effect, and thus the iron loss consequently decreases due to groove formation.

A magnetic flux density that can be generated when a constant magnetic field is applied, for example, B8 [T], which is another index of the magnetic characteristics of the grain-oriented electrical steel sheet, is a magnetic flux density generated under a magnetizing force of 800 A/m. If a larger magnetic flux density can be generated with the same magnetizing force, there is an advantage that the transformer iron core can be downsized. However, when the groove is formed, the gap becomes an inhibiting factor of the magnetic flux generation, and thus, the magnetic flux density that can be generated by the same magnetizing force decreases.

In addition, as mechanical properties, bending having an inflection line in a direction parallel to the sheet width direction is performed in the manufacturing process of the wound transformer iron core, but grooves parallel to the sheet width direction C (perpendicular to the rolling direction L) decrease the resistance to repeated bending strength of the grain-oriented electrical steel sheet and increase the risk of steel sheet fracture, which is disadvantageous.

Next, as another example of the related art, a case where the forming direction of the groove 22 exceeds 0° with respect to the sheet width direction C is shown in FIG. 5. In this case, the mechanical strength against bending is increased. However, since the barrier effect against the magnetic flux is weakened as compared with the case of the groove 21 orthogonal to the rolling direction L as shown in FIG. 4, the effect of magnetic domain refinement is reduced, and the effect of reducing the iron loss is reduced.

Furthermore, as described above, since the groove becomes a resistance to the flow of the magnetic flux, the magnetic flux density generated at a constant magnetizing force, for example, B8, decreases. By forming the groove inclined in the sheet width direction, a decrease in B8 tends to be slightly suppressed, but when the grooves are continuously formed, a large decrease in B8 cannot be avoided.

Therefore, as shown in FIG. 3, the present inventors have considered that a high iron loss improving effect can be obtained by forming the wall of the groove substantially perpendicular to the rolling direction L from a microscopic viewpoint, and it is also possible to resist mechanical bending as long as the groove forming direction from a macroscopic viewpoint has a certain degree of angle from the sheet width direction.

Furthermore, as shown in FIGS. 3(A) and 3(C-2), the present inventors have considered that the arrangement of the dot grooves 1A generates a region where no groove is formed between the grooves from the viewpoint of the surface and the cross section, so that the magnetic flux can flow therethrough, and it is possible to suppress decrease in magnetic flux density that can be generated by a constant magnetizing force.

That is, in the case of the grain-oriented electrical steel sheet 2 having the dot groove array 1 shown in FIG. 1, since the individual dot grooves 1A are microscopically substantially parallel to the sheet width direction C, the magnetic domain refinement effect can be maximized. In addition, since the direction in which the dot groove 1A is formed macroscopically has a somewhat large inclination angle with respect to the sheet width direction C, stress is less likely to concentrate on the dot groove 1A in bending, and the risk of fracture can be suppressed. Further, it is possible to provide the grain-oriented electrical steel sheet 2 in which the decrease in magnetic flux density that can be generated under a constant magnetizing force is small because the region through which the magnetic flux passes remains.

<Laser processing apparatus (second embodiment)>

FIG. 6 is a perspective view showing an outline of a laser processing apparatus B of a second embodiment used to form dot grooves 1A on a grain-oriented electrical steel sheet 2.

The laser processing apparatus B is an apparatus that irradiates the surface of a grain-oriented electrical steel sheet 2 with a laser beam to form discrete dot groove arrays 1 extending in a direction intersecting the sheet width direction C of the grain-oriented electrical steel sheet 2.

The laser processing apparatus B includes a laser irradiation unit 3, a first optical system 5, a second optical system 25, and a scanning mirror 6.

Similarly to the structure of the first embodiment, the laser irradiation unit 3 includes a laser emission unit 8 and a transmission fiber 9. The transmission fiber 9 is connected to a laser beam source (not illustrated).

The second optical system 25 includes a spherical or aspherical lens or the like, and has a function of transmitting the laser beam 10 adjusted by the first optical system 5, sending the laser beam 10 to a scanning mirror 6 described later, and finally condensing the laser beam 10 on the surface of the grain-oriented electrical steel sheet 2. Similarly to the structure of the first embodiment, the scanning mirror 6 includes a polygon mirror 12.

Although not shown in detail in FIG. 6, there is provided a moving mechanism 27 that supports the second optical system 25 and moves the second optical system 25 at a high speed in the front-back direction indicated by an arrow 26 along the optical axis of the laser beam 10. By moving the second optical system 25 back and forth along the optical path of the laser beam 10 in synchronization with the operation of the scanning mirror 6 by the moving mechanism 27, the propagation distance of the laser beam 10 from the second optical system 25 as a starting point to the arrival at the grain-oriented electrical steel sheet 2 after the reflection of the scanning mirror 6 can be matched with the focal length f of the second optical system 25. As a result, uniform condensation is obtained over the entire scanning width.

As in the case of the laser processing apparatus A of the first embodiment, the polygon mirror 12 scans the surface of the grain-oriented electrical steel sheet 2 with a laser beam 10C having passed through the second optical system 25 along the predetermined scanning direction S.

The moving mechanism 27 moves the second optical system 25 in synchronization with the operation of the polygon mirror 12, and forms the dot groove array 1 by forming the dot grooves 1A on the surface of the grain-oriented electrical steel sheet 2 for each spotlight of the laser beam 10C condensed on the surface of the grain-oriented electrical steel sheet 2 by the second optical system 25.

The grain-oriented electrical steel sheet 2 having the dot groove arrays 1 can be manufactured by the laser processing apparatus B shown in FIG. 6.

<Laser processing method (second embodiment)>

A grain-oriented electrical steel sheet manufacturing method for processing the dot groove arrays 1 in the grain-oriented electrical steel sheet 2 by the above-described laser processing apparatus B includes the following steps.

That is, this grain-oriented electrical steel sheet manufacturing method includes a laser irradiation step of irradiating the laser beam 10 using the laser irradiation unit 3.

In addition, this grain-oriented electrical steel sheet manufacturing method includes a first optical processing step of adjusting the spotlight of the laser beam into an elliptical shape and adjusting the direction of the major axis of the ellipse formed by the spotlight of the laser beam using the first optical system 5.

Further, this grain-oriented electrical steel sheet manufacturing method includes a second optical processing step of transmitting the laser beam 10 adjusted by the first optical system 5 and condensing the laser beam on the steel sheet surface by using the second optical system 25 in which the position of the laser beam with respect to the optical axis direction is changed using the moving mechanism 27.

Furthermore, this grain-oriented electrical steel sheet manufacturing method includes a scanning processing step of reflecting the laser beam 10C transmitted through the second optical system 25 to change the traveling direction of the laser beam 10C and moving the position on the steel sheet surface irradiated with the spotlight of the laser beam 10C along the scanning direction S that is a direction intersecting the sheet width direction C of the grain-oriented electrical steel sheet 2 using the scanning mirror 6.

Then, in the first optical processing step, the direction G2 of the major axis of the ellipse formed by the spotlight of the laser beam 10C on the steel sheet surface is adjusted so as to be a direction different from the scanning direction S and along the sheet width direction C of the grain-oriented electrical steel sheet 2, and the second optical system 25 is moved by the moving mechanism 27 in synchronization with the operation of the scanning mirror 6. Further, in the second optical processing step, the dot groove array 1 is formed on the steel sheet surface by forming the dot grooves 1A on the steel sheet surface for each spotlight of the laser beam 10C condensed on the steel sheet surface.

[Examples]

<Example 1>

A grain-oriented electrical steel sheet becomes a final product through a manufacturing process in which a steel piece whose components are adjusted is subjected to hot rolling, cold rolling, primary recrystallization/decarburization annealing, secondary recrystallization, flattening annealing, and surface coating in this order.

The dot groove with a depth of several tens $\mu$m is highly likely to disappear by cold rolling, and thus substantially the same effect can be obtained even if the groove is formed at any point of the step as long as it is after the cold rolling step.

In Example 1 of the present invention, groove formation was performed on the steel sheet after the cold rolling step using a groove processing method using a laser beam, and thereafter, a product sheet of a grain-oriented electrical steel sheet was manufactured through all the steps after the primary recrystallization step. Then, the iron loss characteristics, bending resistance, and magnetic flux density of this grain-oriented electrical steel sheet were evaluated in comparison with the grain-oriented electrical steel sheet according to the related art.

The grain-oriented electrical steel sheet was processed using a cold-rolled sheet with a sheet width of 100 mm, a sheet length of 500 mm, and a sheet thickness of 0.23 mm, a test of 30 sheets was performed for each different test conditions, and characteristics were evaluated by an average value thereof.

Pulsed laser beam was used as the laser beam. The pulsed laser used had a laser pulse frequency of 225 kHz, a pulse energy of 7.0 mJ, a pulse time width Tp of 0.5 $\mu$s, and an elliptical spotlight shape with a minor axis diameter of 50 $\mu$m and a major axis diameter of 80 $\mu$m. The beam scanning speed was set to 20 m/s.

In the high-speed scanning as described above, since the laser beam moves within the pulse time width, the shape of the elliptical dot groove to be formed has a length in the major axis direction dc of 90 $\mu$m and a length in the minor axis direction dL of 52 $\mu$m. The maximum groove depth h at this time was 35 $\mu$m. That is, in the method of the invention example, one dot groove is formed by one pulse of laser beam.

In the obtained grain-oriented electrical steel sheet, a distance Pc between the dot grooves was about 90 $\mu$m from a relationship among the pulse frequency Fp, the pulse time width Tp, and the scanning speed Vs, and as a result, the distance Pc coincided with the major axis length of the elliptical groove. Therefore, an overlap width D between the dot groove arrays shown in FIG. 1 was 0 $\mu$m.

The condensed laser beam was scanned in one direction intersecting the sheet width direction C, the grain-oriented electrical steel sheet 2 was moved in the direction L (rolling direction) at a constant speed, and the moving speed (sheet passing speed) and the like were adjusted, so that the interval PL of the groove part along the rolling direction L (longitudinal direction) of the grain-oriented electrical steel sheet 2 was set to 3 mm.

Under the above conditions, an inclination angle $\theta g2$ of the spot was appropriately adjusted so that an inclination angle $\theta g$, which is an angle formed by a major axis direction G of the individual dot grooves having a minute elliptical shape and the sheet width direction C, was 0°, and a scanning angle $\theta s$ was changed to evaluate iron loss W17/50 and mechanical properties by a repeated bending test.

As a grain-oriented electrical steel sheet of a comparative example, a grain-oriented electrical steel sheet in which continuous grooves were formed was used. Then, characteristics in a case where the scanning angle θs was changed in the same manner under the conditions of dL of 52 μm and PL of 3 mm as in the invention example were evaluated.

The average groove depth of the grain-oriented electrical steel sheet of the comparative example was set to about 30 μm in which the iron loss value was the lowest at a scanning angle θs of 0°.

In the case of the invention example, in the dot groove, the depth of the microelliptical groove in the cross section of the grain-oriented electrical steel sheet 2 was shallow at the end in the length direction of the dot groove. Therefore, in order to obtain a groove depth equivalent to that of the continuous groove as an average value, it is desirable that the maximum depth h of the groove central part be slightly deeper than that in the case of the continuous groove.

As iron loss, the iron loss value per unit weight (W17/50) [W/kg] at a magnetizing force of 1.7 Alm at a frequency of 50 Hz was evaluated.

In the repeated bending test, as shown in FIG. 7(A), the grain-oriented electrical steel sheet 2 was fixed with a jig 28, bending was repeatedly performed in the direction L, and the bending resistance strength was evaluated by the number of bending times Nb until the grain-oriented electrical steel sheet 2 was broken at a fixing point. The larger the number of bending times Nb, the higher the bending resistance strength, which corresponds to a low risk of sheet fracture when an iron core is manufactured. FIG. 7(B) shows an arrangement relationship between the bent grain-oriented electrical steel sheet 2 and the dot groove array 1.

The evaluation result of the iron loss value (W17/50) is shown in FIG. 8, and the evaluation result of the number of bending times Nb is shown in FIG. 9.

From FIG. 8, in the continuous groove of the conventional shape, the iron loss reduction effect was reduced by increasing the scanning angle θs, and thus the iron loss value (W17/50) increased with the increase in the scanning angle θs.

On the other hand, in the grain-oriented electrical steel sheet according to the invention example, since the directions of the individual groove parts were substantially parallel to the sheet width direction C (substantially orthogonal to the direction L), the iron loss value (W17/50) was smaller than that in the case of the conventional continuous groove, and the iron loss value (W17/50) hardly increased up to a scanning angle θs of about 30°.

It is considered that, at a scanning angle θs of larger than 30°, since the gap between the obliquely arranged microelliptical grooves excessively increased, the barrier effect of the magnetic flux, which is a source of iron loss improvement, decreased, and the iron loss increased. Therefore, even if the scanning angle θs is relatively large, a better iron loss is obtained in the invention example than in the comparative example, and it has been found that the scanning angle θs is more preferably 30° or less.

FIG. 9 is a comparison result obtained by examining the dependency of the number of bending times Nb obtained by the repeated bending test on the scanning angle θs.

It has been found that the number of bending times Nb in the invention example increased with an increase in the scanning angle θs almost similarly to the case of the grain-oriented electrical steel sheet of the related art, and Nb greatly increased when the scanning angle θs was larger than 0°.

Therefore, from the results shown in FIGS. 8 and 9, it has been found that the grain-oriented electrical steel sheet of the invention example can achieve both low iron loss and sufficient resistance to repeated bending workability.

<Example 2>

FIGS. 10 and 11 show the iron loss value (W17/50) when the inclination angle θg of the dot groove was changed in the same direction as the scanning angle θs in a case where the scanning angle θs was set to 10° or 30°. Other conditions were the same as those in Example 1.

It has been found that the inclination angle θg is preferably adjusted to 10° or less since the increase in the inclination angle θg from 0° decreases the barrier effect of the magnetic flux and thus the iron loss value (W17/50) remains slightly increased, but the increase in the iron loss value (W17/50) becomes significant when the inclination angle θg exceeds 10°.

<Example 3>

A relationship between an interval D representing the degree of overlap of the dot grooves along the sheet width direction C (an interval between adjacent dot grooves along the sheet width direction C) and the iron loss value (W17/50) was evaluated. The interval D is illustrated in FIG. 1(B), and when the interval D is positive, the end portions of the dot grooves adjacent to each other are separated from each other along the sheet width direction C, and when the interval D is negative, the end portions of the dot grooves adjacent to each other overlap each other.

FIG. 12 is a result of examining influence on the iron loss value (W17/50) represented by the ratio of D representing the degree of overlap to the major axis diameter dc of the dot groove. With θs of 10° and θg of 0°, and

# EP 4 467 278 A1

the scanning speed of the laser beam and the pulse time width Tp being constant, the center-to-center distance Pc was controlled by changing the pulse frequency Fp to adjust the interval D. The other conditions were the same as those in Example 1.

From the results shown in FIG. 12, it has been found that as the value of the interval D indicating the degree of overlap increases, the barrier effect of magnetic flux due to the gap between the dot grooves adjacent to each other decreases, and the iron loss value (W17/50) increases.

On the other hand, when the value of the interval D representing the degree of overlap is negative and the overlap width increases, the increase in the iron loss value (W17/50) is relatively suppressed. W17/50 is iron loss when magnetization is forcibly performed such that the maximum magnetic flux density is 1.7 T by an AC magnetic field of 50 Hz. Therefore, when a large number of grooves are formed on the surface, as shown in FIGS. 3(C-2), 4(C-2), and 5(C-2), the cross-sectional area in the direction L decreases in the lower portion of the groove, and the magnetic flux density locally increases. This is because the iron loss is proportional to the square of the magnetic flux density, that is, the iron loss value locally increases. Accordingly, it is not preferable to set the value of the interval D to an excessive value on the negative side. Therefore, it has been found that the range of D/dc is preferably set to a range of -0.3 or more and 0.2 or less.

<Example 4>

FIG. 16 is an explanatory view of Example 4 which is an invention example, and is a case where grooves are formed by dividing a dot groove array into a plurality of portions in the width direction on a steel sheet with a sheet width Wc of 1000 mm corresponding to an actual coil width assuming a case where the steel sheet is continuously manufactured in a coil shape in an actual manufacturing line of an electrical steel sheet. The present example is an example showing influence of the overlap width Da of the dot groove arrays 44A adjacent to each other.

For the sheet width Wc of 1000 mm, the number of divisions was set to 6, and each dot groove array 44A was formed by an individual laser processing apparatus. A length of each dot groove array 44A in the direction C corresponded to a scanning width of each laser processing apparatus, and was about 200 mm at the maximum. Here, $\theta$s was 10° and $\theta$g was 0°, and the other conditions were the same as those in Example 1. Using 12 steel sheets with a width of 1000 mm and a length of 2000 mm as cold-rolled electrical steel sheets, grooving as shown in FIG. 16 was performed under 12 conditions in which the overlap width Da was changed, and the iron loss W17/50 was evaluated. In the iron loss evaluation, 30 samples of 100 mm $\times$ 500 mm were arbitrarily cut out from each steel sheet of 1000 mm $\times$ 2000 mm, the iron loss was measured, and the iron loss was evaluated by an average value thereof. The results are shown in FIG. 17.

The iron loss shows the lowest value at an overlap width Da of around 0 mm, and when the overlap width Da is larger than 0 mm, that is, the iron loss increases in a direction in which the dot groove arrays 44A adjacent to each other are separated from each other. This is considered to be because the influence of the region where no groove is formed between the dot groove arrays 44A increases, and the iron loss reduction effect decreases. In addition, when the overlap width Da is smaller than 0 mm, that is, when the overlap width Da in the direction C of the dot groove arrays 44A adjacent to each other increases, it is considered that the iron loss increases due to the local increase in the magnetic flux density in the lower portion of the groove, similarly to the influence of the decrease in D/dc shown in Example 3. Therefore, it has been found that the overlap width Da has an appropriate range, and specifically, -10 mm $\leq$ Da $\leq$ 5 mm is preferable.

<Example 5>

FIG. 18 and Table 1 are an explanatory view and comparison results comparing the related art and the invention example with respect to iron loss, bending properties, and magnetic flux density, based on the characteristics of the grain-oriented electrical steel sheet before grooving as a reference. A grain-oriented electrical steel sheet after cold rolling was prepared, and the characteristics of these groove patterns were compared and evaluated by the same method as the method described in Example 1.

[Table 1]

| Comparison condition | | Groove shape | Groove width dL (μm) | Groove length dc (μm) | Maximum groove depth h (μm) | Average groove depth ha (μm) | Groove arrangement direction θs (°) | Dot groove direction θg (°) | Dot groove edge interval D (μm) | Dot groove interval Pc (μm) | Groove interval PL (mm) | Iron loss W17/50 (W/kg) | Number of bending times until fracture Nb (Number of times) | Magnetic flux density B8 (T) |
|---|---|---|---|---|---|---|---|---|---|---|---|---|---|---|
| Comparative Example | Reference | No groove | | | | | | | | | | 0.840 | 17 | 1.910 |
| Comparative Example | A | Continuous | 52 | | 31 | 30 | 0 | | | | 3 | 0.763 | 3 | 1.860 |
| Comparative Example | B | Continuous | 52 | | 31 | 30 | 10 | | | | 3 | 0.767 | 10 | 1.875 |
| Comparative Example | C | Point | 52 | 90 | 35 | 28 | 10 | 10 | 0 | 90 | 3 | 0.768 | 12 | 1.880 |
| Present Invention | E | Point | 52 | 90 | 35 | 28 | 10 | 0 | 0 | 90 | 3 | 0.763 | 12 | 1.900 |

Here, the magnetic flux density is magnetic flux density B8 [T] generated when a magnetic field of 0.8 Aim is applied. As the value of B8 is larger, the magnetic flux density that can be generated with a constant magnetizing force is higher, and thus excellent performance can be obtained even with a small transformer. FIG. 18 is a schematic view of grooves of steel sheets compared. Comparative Example A shows an example in which a continuous groove with a substantially uniform depth in the entire width of the steel sheet is formed in a direction perpendicular to the rolling direction. Comparative Example B shows an example in which a similar groove is inclined by 10° from the sheet width direction C. Comparative Example C is an example in which the dot groove array consisting of the dot grooves is formed to be inclined by 10° from the sheet width direction, the direction of each dot groove constituting the dot groove array is also inclined by 10° in the same direction as the dot groove array, and thus both ends of the dot grooves adjacent to each other are formed to have apexes in contact with each other. On the other hand, Invention Example E is the same as the dot groove array shown in Example 1.

From the results shown in Table 1, in Comparative Example A, the effect of reducing the iron loss is high, but the bending resistance strength is low, and the reduction margin of the magnetic flux density is large, with respect to the characteristic reference before grooving. In Comparative Example B, the bending strength is relatively high, and the deterioration margin of the magnetic flux density is also small, but the iron loss improvement margin is deteriorated. In Comparative Example C, the bending strength and the magnetic flux density characteristics are improved as compared with those in Comparative Example B, but the iron loss characteristics still remain poor. On the other hand, in Invention Example E, low iron loss and high magnetic flux density characteristics are obtained while the bending strength is maintained.

Inhibition of the flow of the magnetic flux by the gap is a source of the iron loss reduction effect. In the invention example, inhibition of the magnetic flux is increased by forming fine dot grooves substantially perpendicular to the rolling direction, so that the magnetic domain control effect can be obtained. Since a portion where no groove is formed is generated by the dot groove, the magnetic domain control effect may be slightly inferior to that in the case of the continuous groove. However, on the other hand, by uniformly forming minute regions through which the magnetic flux easily passes in the width direction, local concentration of the magnetic flux on the surface and the cross section in the direction L is suppressed as shown in FIG. 3. Therefore, an increase component of the iron loss proportional to the square of the magnetic flux density is less, and iron loss equivalent to that of Comparative Example A having the lowest iron loss in the conventional example is obtained. In addition, as shown in FIG. 3, since minute portions through which the magnetic flux easily passes are uniformly present in the entire steel sheet, a large decrease in the magnetic flux density can be suppressed.

In Examples described above, the major axis diameter dc and the minor axis diameter dL of the elliptical groove were 90 $\mu$m and 52 $\mu$m, respectively, but the dimensional shape of the elliptical groove is not limited to these values. However, when the minor axis diameter dL is an extremely narrow groove width of 10 $\mu$m or less, the effect of inhibiting magnetic flux generation is reduced due to magnetic coupling in the groove part, and the iron loss reduction effect may be greatly reduced.

In addition, when the groove width dL exceeds 300 $\mu$m, an increase in the volume of the base metal removed becomes remarkable and the generation of magnetic flux itself is inhibited, which is not preferable in the case of the grain-oriented electrical steel sheet in which a high magnetic flux density is required. Therefore, the range of the minor axis diameter dL is more preferably 10 $\mu$m to 300 $\mu$m.

Note that the major axis diameter dc may be longer than the groove width dL, but for example, when the major axis diameter dc exceeds 30000 $\mu$m, that is, 30 mm, in a case where a transformer iron core is manufactured by cutting the sheet width to about 100 mm, the number of dot grooves included in the width is reduced to 3 to 4. The flow of the magnetic flux is different from the others between the dot groove and the groove, and the magnetic flux tends to be concentrated. In a case where there are only several such portions, the magnetic characteristics as a sheet may be non-uniform, and therefore, the major axis diameter dc is preferably about 30 mm at the maximum.

In the present example, the groove depth h was 35 $\mu$m, but is not limited to this groove depth. However, when the groove depth h is below 5 $\mu$m, a magnetic domain control effect cannot be expected, and when a deep groove exceeding 100 $\mu$m is formed, the magnetic flux generation is greatly inhibited as described above, which is not preferable in the case of the grain-oriented electrical steel sheet in which a high magnetic flux density is required. Therefore, the range of the groove depth h is preferably set to 5 $\mu$m to 100 $\mu$m.

In the present example, the interval PL in the direction L (rolling direction) of groove formation was 3 mm, but is not limited thereto. However, when the pitch PL exceeds 10 mm, a synergistic effect of magnetic domain control of each groove part adjacent in the direction L cannot be expected, and when the pitch PL is less than 1 mm, the magnetic flux generation is greatly inhibited, which is not preferable in the case of the grain-oriented electrical steel sheet in which a high magnetic flux density is required. Therefore, the range of the pitch PL in the direction L is preferably set to 1 mm to 10 mm.

Moreover, in the present example and each of the above embodiments, the example in which the dot groove array is formed only on one surface of the steel sheet has been described, but grooves may be formed on both surfaces of the steel sheet. In this case, in order to obtain a similar iron loss reduction effect, a similar iron loss reduction effect can be expected even if the groove depth per one surface is reduced.

<Laser processing apparatus (third embodiment)>

FIG. 13 is a perspective view showing an outline of a laser processing apparatus E of a third embodiment used to form grouped dot grooves 33A on a grain-oriented electrical steel sheet 2.

The laser processing apparatus E is an apparatus that irradiates the surface of a grain-oriented electrical steel sheet 2 with a laser beam to form dot groove arrays 33 extending in a direction intersecting the sheet width direction C of the grain-oriented electrical steel sheet 2 as shown in FIG. 14.

The grouped dot groove 33A formed in the grain-oriented electrical steel sheet by the laser processing apparatus E of the present embodiment is different in shape from the dot groove 1A shown in FIG. 1.

FIG. 14 shows the dot groove array 33 in which plural grouped dot grooves 33A are intermittently formed. The grouped dot groove 33A of the present embodiment has a shape including a continuous groove part (elliptical hole 33a) in which plural elliptical holes 33a are connected in a point group in a daisy chain in plane view. Each elliptical hole 33a is one hole having an inner surface 33b and a bottom surface 33c, and the plural elliptical holes 33a are connected in a point group in a daisy chain along the scanning direction S by partially overlapping the inner surfaces on the major axis side of the elliptical holes 33a adjacent to each other to form one grouped dot groove 33A.

Except that the grouped dot groove 33A of the present embodiment is an aggregate of the plurality of elliptical holes 33a, the configuration and the formation process of the dot groove array 1 consisting of the dot grooves 1A previously described are the same.

That is, it is also equivalent to those of the dot groove 1A shown in FIG. 1 that the grouped dot grooves 33A are intermittently aligned and formed at a predetermined pitch along the scanning direction S, the inclination angle θg of the major axis of the grouped dot groove 33A is defined and the scanning angle θs is defined with respect to the sheet width direction C, the length dc in the major axis direction of the grouped dot groove 33A is defined, and the minor axis length dc of the grouped dot groove 33A is defined. Further, it is also equivalent to that of the previous dot groove array 1 that the dot groove arrays 33, which are an aggregate of the grouped dot grooves 33A, are formed to be aligned at a predetermined interval PL in the longitudinal direction of the grain-oriented electrical steel sheet 2. Furthermore, it is also equivalent that the spotlight condensed in a point group has a groove shape formed by moving at the speed Vs during the pulse time width Tp.

The laser processing apparatus E shown in FIG. 13 includes a laser irradiation unit 3, a first optical system 5, a diffraction grating element (Diffractive Optics) 34 as a laser beam intensity profile conversion element, a scanning mirror 6 (a polygon mirror 12), and a third optical system 35.

Similarly to the structure of the first embodiment, the laser irradiation unit 3 includes a laser emission unit 8 and a transmission fiber 9, and the transmission fiber 9 is connected to a laser beam source (not illustrated).

The first optical system 5 disposed on the emission side of the laser irradiation unit 3 includes a cylindrical lens collimator 11 similarly to the previous laser processing apparatus A.

The third optical system 35 includes an fθ lens (scanning lens) 19 similarly to the structure of the second optical system 7 of the first embodiment.

The diffraction grating element 34 is provided as the laser beam intensity profile conversion element between the emission side of the cylindrical lens collimator 11 and the polygon mirror 12. When the laser beam is transmitted through the laser beam splitter 34, the laser beam intensity profile conversion element 34 splits a spatial intensity profile of the laser beam into a plurality of two or more continuous intensity profiles by diffraction. As a result, the laser beam splitter 34 has a function of converting the laser beam into continuous spotlights (spotlights that can form a grouped dot groove 33A with continuous elliptical holes 33a as shown in FIG. 14(C)) continuing in a group (the grouped dot grooves 33A are intermittently continuous as shown in FIG. 14(B)). An example of the intensity profile is shown in FIG. 13(C). FIG. 13(C) shows a plane view shape of the grouped dot groove 33A and a spatial intensity profile of the laser beam in a case where the spatial intensity profile of the laser beam was adjusted to six continuous intensity profiles.

The laser beam intensity profile conversion element 34 is an element that converts or splits an intensity profile by diffraction or transmission of a laser beam, and can combine with an fθ lens to make an intensity profile at a condensing point (surface of the grain-oriented electrical steel sheet 2) into a group.

After the spatial intensity of the laser beam is adjusted to six intensity profiles in this manner, a laser beam 10D is sent to the polygon mirror 12, reflected by the polygon mirror 12, and scanned. By condensing the scanned laser beam 10E as a laser beam 10F on the steel sheet surface via the third optical system 35 having the same configuration as the second optical system 7 of the first embodiment, it is possible to form the continuous grouped dot grooves 33A continuing in a group on the steel sheet surface of the grain-oriented electrical steel sheet 2.

Here, since the laser beam 10F condensed and irradiated on the steel sheet surface of the grain-oriented electrical steel sheet 2 shows a spatial intensity profile having six continuous intensity profiles as shown in FIG. 13(C), a grouped dot groove 33A in which six elliptical holes 33a are connected in a daisy chain can be formed instead of the dot groove 1A formed in the previous embodiment.

In the laser processing apparatus E shown in FIG. 13(A), for example, a single intensity pulsed laser beam can be converted into an intensity profile having two or more peaks at the condensing point (steel sheet surface) by the combination of the laser beam intensity profile conversion element 34 and the fθ lens 19, so that the individual grouped dot grooves 33A can be constituted as an aggregate of the plurality of elliptical holes 33a.

In the laser processing apparatus E shown in FIG. 13(A), as the laser beam to be incident on the laser beam intensity profile conversion element 34, for example, a Gaussian distribution laser beam having a high central intensity and a low single peak at an end can be used. Moreover, as shown in FIG. 13(B), a laser beam having a flat-top mode distribution may be used.

Even in the grain-oriented electrical steel sheet 2 having the dot groove arrays 33 including the grouped dot grooves 33A connected in a daisy chain shown in FIG. 14, it is possible to obtain the same operation and effects as those of the grain-oriented electrical steel sheet 2 of the first embodiment previously described.

<Laser processing method (third embodiment)>

A grain-oriented electrical steel sheet manufacturing method for processing the dot groove arrays 1 in the grain-oriented electrical steel sheet 2 by the above-described laser processing apparatus E includes the following steps.

That is, this grain-oriented electrical steel sheet manufacturing method includes a laser irradiation step of irradiating the laser beam 10 using the laser irradiation unit 3.

In addition, this grain-oriented electrical steel sheet manufacturing method includes a first optical processing step of adjusting the spotlight of the laser beam 10 into an elliptical shape and adjusting the direction of the major axis of the ellipse formed by the spotlight of the laser beam 10 using the first optical system 5.

Moreover, this grain-oriented electrical steel sheet manufacturing method includes a laser splitting step of transmitting the laser beam 10 and adjusting the spatial intensity profile of the laser beam 10 to a plurality of two or more continuous intensity profiles by using the laser beam intensity profile conversion element 34.

Further, this grain-oriented electrical steel sheet manufacturing method includes a scanning processing step of reflecting a laser beam 10 adjusted by the laser beam splitter 34 to change the traveling direction of the laser beam 10 and moving the position on the steel sheet irradiated with the spotlight of the laser beam 10 along the scanning direction S that is a direction intersecting the sheet width direction of the grain-oriented electrical steel sheet 2 using the scanning mirror 6.

Furthermore, this grain-oriented electrical steel sheet manufacturing method includes a third optical processing step of transmitting the laser beam reflected by the scanning mirror 6 and condensing the laser beam on the surface of the steel sheet using the third optical system 35.

In the first optical processing step, the direction G of the major axis of the ellipse formed by the spotlight of the laser beam 10F on the steel sheet surface is adjusted in a direction different from the scanning direction S and along the sheet width direction C of the steel sheet. Further, in the third optical processing step, the dot groove array 33 is formed on the steel sheet surface by forming a groove parts on the steel sheet surface for each spotlight of the laser beam 10F condensed on the steel sheet surface.

In the previous embodiment, the rotary polygon mirror 12 used as the scanning mirror 6 may be changed to a galvanometer mirror 30 having the configuration shown in FIG. 15. The galvanometer mirror 30 shown in FIG. 15 is rotationally driven in the arrow direction of FIG. 15 by a drive motor 31. The laser beam can be scanned by changing the reflection direction of the laser beam according to the rotation angle of the galvanometer mirror 30.

Hereinabove, the description of embodiments, examples, and various modification examples of the present invention has been given by exemplifying the groove processing method using a laser beam, but a feature of the grain-oriented electrical steel sheet of the present invention is that dot groove arrays consisting of fine dot grooves or grouped dot grooves are appropriately arranged. Therefore, as long as an appropriate groove is formed as disclosed in the present invention, the processing method is not limited to laser processing, and for example, the groove may be mechanically formed using a tooth profile roll having an uneven shape corresponding to an appropriate dot groove array pattern or a tooth profile press. Alternatively, the groove may be formed by an etching method in which a resist film is formed on the steel sheet surface in an appropriate pattern and an appropriate groove pattern is chemically formed by immersing the steel sheet in a corrosive liquid. Alternatively, as the non-contact processing method, a fine processing method using an electron beam may be used.

The gist of the present invention described above will be summarized below.

(1) That is, a grain-oriented electrical steel sheet according to one aspect of the present invention is:

a grain-oriented electrical steel sheet having a rolling direction and a sheet width direction orthogonal to the rolling direction along a steel sheet surface, wherein
the rolling direction coincides with an easy magnetization direction of the grain-oriented electrical steel sheet,

the grain-oriented electrical steel sheet has a dot groove array extending along a dot groove array direction intersecting the sheet width direction on the steel sheet surface,

the dot groove array is configured by linearly arranging a plurality of substantially elliptical dot grooves or a plurality of grouped dot grooves formed by linearly connecting a plurality of holes, and

a major axis of the dot groove or the grouped dot groove intersects with the dot groove array direction.

(2) The grain-oriented electrical steel sheet according to (1) above, wherein

when an angle formed by the major axis with respect to the sheet width direction is θg [°] and an angle formed by the dot groove array direction with respect to the sheet width direction is θs [°], the following (Formula 1) to (Formula 3) may be satisfied:

$$0° \leq |\theta g| \leq 10° \cdots \text{(Formula 1)}$$

$$0° < |\theta s| \leq 30° \cdots \text{(Formula 2)}$$

$$|\theta g| \leq |\theta s| \cdots \text{(Formula 3)}.$$

(3) The grain-oriented electrical steel sheet according to (1) or (2) above may adopt the following configuration:

the dot groove array includes the plurality of dot grooves; and

when a length along a direction of the major axis of the dot groove is dc [μm] and an interval of end portions of the dot grooves adjacent to each other along the sheet width direction is D [μm], the following (Formula 4) is satisfied:

$$-0.3 \leq (D/dc) \leq 0.2 \cdots \text{(Formula 4)}$$

wherein, in the line of sight viewed along the rolling direction, the interval D [μm] is a positive value in a case where the end portions do not overlap each other, 0 [μm] in a case where the end portions are in contact at one point, and a negative value in a case where the end portions overlap each other.

(4) The electrical steel sheet according to any one of (1) to (3) above may adopt the following configuration:

the dot groove array includes the plurality of dot grooves; and

when a length along the direction of the major axis of the dot groove is dc [μm], a direction orthogonal to the major axis is a minor axis direction of the dot groove, and a length along the minor axis direction of the dot groove is dL [μm], the following (Formula 5) and (Formula 6) are satisfied. The absolute maximum value of the length dc [μm] may be 30000 μm.

$$10 \text{ μm} \leq dL \leq 300 \text{ μm} \cdots \text{(Formula 5)}$$

$$dL \leq dc \cdots \text{(Formula 6)}$$

(5) The electrical steel sheet according to any one of (1) to (4) above may adopt the following configuration:

the dot groove array comprises the plurality of dot grooves; and

when a maximum depth of the dot groove is h [μm], the following (Formula 7) is satisfied:

$$5 \text{ μm} \leq h \leq 100 \text{ μm} \cdots \text{(Formula 7)}.$$

(6) The electrical steel sheet according to any one of (1) to (5) above may adopt the following configuration:

the plural dot groove arrays are formed on the steel sheet surface at equal intervals in the rolling direction; and

when an interval of the dot groove arrays adjacent to each other along the rolling direction is PL [mm], the following (Formula 8) is satisfied:

$$1 \text{ mm} \leq PL \leq 10 \text{ mm} \cdots \text{(Formula 8)}.$$

(7) The electrical steel sheet according to any one of (1) to (6) above may adopt the following configuration:

the dot groove array is divided into two or more in the sheet width direction, and when an interval between end portions of the dot groove arrays adjacent to each other at a division position along the sheet width direction is Da [mm], the following (Formula 9) is satisfied:

$$-10 \text{ mm} \leq Da \leq 2 \text{ mm} \cdots \text{(Formula 9)}$$

wherein, in the line of sight viewed along the rolling direction, the interval Da [mm] is a positive value in a case where the end portions do not overlap each other, 0 [μm] in a case where the end portions are in contact at one point, and a negative value in a case where the end portions overlap each other.

(8) Also, a grain-oriented electrical steel sheet manufacturing apparatus according to an aspect of the present invention is: a grain-oriented electrical steel sheet manufacturing apparatus for manufacturing the grain-oriented electrical steel sheet according to any one of (1) to (7) above by irradiating the steel sheet surface with a laser beam to form the dot groove array comprising the dot grooves, the apparatus including:

a laser irradiation unit that irradiates the laser beam;
a first optical system that forms a spotlight of the laser beam into an elliptical shape and adjusts a direction of the major axis of the ellipse formed by the spotlight;
a scanning mirror that reflects the laser beam adjusted by the first optical system to change a traveling direction, and moves a position on the steel sheet surface irradiated with the spotlight along a scanning direction intersecting the sheet width direction; and
a second optical system that transmits or reflects the laser beam reflected by the scanning mirror and condenses the laser beam on the steel sheet surface, wherein
the first optical system adjusts the direction of the major axis of the ellipse formed by the spotlight on the steel sheet surface in a direction intersecting the scanning direction,
the dot groove array is formed on the steel sheet surface by forming the dot grooves on the steel sheet surface for the each spotlight condensed on the steel sheet surface by the second optical system, and
when a pulse frequency of the laser beam is Fs [Hz], a moving speed of the spotlight on the steel sheet surface is Vs [m/s], a center-to-center distance of the dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 10) and (Formula 11) are satisfied:

$$Pc = D + dc \times \cos\theta g \cdots \text{(Formula 10)}$$

$$Pc/\cos\theta s = (Vs/Fs) \times 10^6 \cdots \text{(Formula 11)}$$

(9) Moreover, a grain-oriented electrical steel sheet manufacturing apparatus according to another aspect of the present invention is: a grain-oriented electrical steel sheet manufacturing apparatus for manufacturing the grain-oriented electrical steel sheet according to any one of (1) to (7) above by irradiating the steel sheet surface with a laser beam to form the dot groove array comprising the dot grooves, the apparatus including:

a laser irradiation unit that irradiates the laser beam;
a first optical system that forms a spotlight of the laser beam into an elliptical shape and adjusts a direction of the major axis of the ellipse formed by the spotlight;
a second optical system that transmits the laser beam adjusted by the first optical system and condenses the laser beam on the steel sheet surface; and
a scanning mirror that reflects the laser beam transmitted through the second optical system to change a traveling direction, and moves a position on the steel sheet surface irradiated with the spotlight along a scanning direction intersecting the sheet width direction, wherein

the first optical system adjusts the direction of the major axis of the ellipse formed by the spotlight on the steel sheet surface in a direction intersecting the scanning direction,

the dot groove array is formed on the steel sheet surface by forming the dot grooves on the steel sheet surface for the each spotlight condensed on the steel sheet surface by the second optical system, and

when a pulse frequency of the laser beam is Fs [Hz], a moving speed of the spotlight on the steel sheet surface is Vs [m/s], a center-to-center distance of the dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 12) and (Formula 13) are satisfied:

$$Pc = D + dc \times \cos\theta g \cdots (Formula\ 12)$$

$$Pc/\cos\theta s = (Vs/Fs) \times 10^6 \cdots (Formula\ 13).$$

(10) Further, a grain-oriented electrical steel sheet manufacturing apparatus according to another aspect of the present invention is: a grain-oriented electrical steel sheet manufacturing apparatus for manufacturing the grain-oriented electrical steel sheet according to (1) or (2) above by irradiating the steel sheet surface with a laser beam to form the dot groove array comprising the grouped dot grooves, the apparatus including:

a laser irradiation unit that irradiates the laser beam;

a first optical system that forms a spotlight of the laser beam into an elliptical shape and adjusts a direction of the major axis of the ellipse formed by the spotlight;

a laser beam intensity profile conversion element that transmits the laser beam adjusted by the first optical system and splits the laser beam into a plurality of intensity profiles, thereby converting the laser beam into continuous spotlights continuing in a group;

a scanning mirror that reflects the continuous spotlights converted by the laser beam intensity profile conversion element to change a traveling direction, and moves a position on the steel sheet surface on which a central position of each group of the continuous spotlights is irradiated, along a scanning direction intersecting the sheet width direction; and

a third optical system that transmits the continuous spotlights reflected by the scanning mirror and condenses the continuous spotlights on the steel sheet surface, wherein

the first optical system adjusts a direction of the continuous direction of the continuous spotlights on the steel sheet surface to a direction intersecting the scanning direction,

the dot groove array is formed on the steel sheet surface by forming the grouped dot grooves on the steel sheet surface for each of the continuous spotlights condensed on the steel sheet surface by the third optical system, and

when a pulse frequency of the laser beam is Fs [Hz], a moving speed of the spotlight on the steel sheet surface is Vs [m/s], a center-to-center distance of the grouped dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 14) and (Formula 15) are satisfied:

$$Pc = D + dc \times \cos\theta g \cdots (Formula\ 14)$$

$$Pc/\cos\theta s = (Vs/Fs) \times 10^6 \cdots (Formula\ 15).$$

(11) Also, a grain-oriented electrical steel sheet manufacturing method according to an aspect of the present invention is:

a grain-oriented electrical steel sheet manufacturing method for manufacturing the grain-oriented electrical steel sheet according to any one of (1) to (7) above by irradiating the steel sheet surface with a laser beam to form the dot groove array comprising the dot grooves, the method including:

a first step of forming a spotlight of the laser beam into an elliptical shape and adjusting a direction of the major axis of the ellipse formed by the spotlight;

a second step of changing a traveling direction of the laser beam in which the direction of the major axis is adjusted, and moving a position on the steel sheet surface irradiated with the spotlight along a scanning direction intersecting the sheet width direction; and

a third step of condensing the spotlight on the steel sheet surface, wherein

in the first step, the direction of the major axis of the ellipse formed by the spotlight on the steel sheet surface is adjusted in a direction intersecting the scanning direction, and

in the third step, the dot groove array is formed on the steel sheet surface by forming the dot grooves on the steel sheet surface for the each spotlight condensed on the steel sheet surface.

(12) Moreover, a grain-oriented electrical steel sheet manufacturing method according to another aspect of the present invention is: a grain-oriented electrical steel sheet manufacturing method for manufacturing the grain-oriented electrical steel sheet according to claim 1 or 2 by irradiating the steel sheet surface with a laser beam to form the dot groove array comprising the grouped dot grooves, the method including:

a fourth step of forming a spotlight of the laser beam into an elliptical shape and adjusting a direction of the major axis of the ellipse formed by the spotlight;

a fifth step of splitting the laser beam in which the direction of the major axis is adjusted into a plurality of intensity profiles to convert the laser beam into continuous spotlights continuing in a group;

a sixth step of moving a position on the steel sheet surface on which a central position of the each group of the continuous spotlights is irradiated, along a scanning direction intersecting the sheet width direction; and

a seventh step of condensing the continuous spotlights on the steel sheet surface, wherein

in the fifth step, a direction of the continuous direction of the continuous spotlights on the steel sheet surface is adjusted to a direction intersecting the scanning direction, and

in the seventh step, the grouped dot grooves are formed on the steel sheet surface for each of the continuous spotlights condensed on the steel sheet surface to form the dot groove array on the steel sheet surface.

(13) The grain-oriented electrical steel sheet manufacturing method according to (11) or (12), wherein when a pulse frequency of the laser beam is Fs [Hz], a moving speed of the spotlight on the steel sheet surface is Vs [m/s], a center-to-center distance of the grouped dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 16) and (Formula 17) may be satisfied:

$$Pc = D + dc \times cos\theta g \cdots (Formula\ 16)$$

$$Pc/cos\theta s = (Vs/Fs) \times 10^6 \cdots (Formula\ 17).$$

[Field of Industrial Application]

According to each of the aspects of the present invention, it is possible to provide a grain-oriented electrical steel sheet in which deterioration in resistance to repeated bending workability is suppressed, deterioration in magnetic flux density is suppressed, and iron loss is also reduced. In addition, it is possible to provide a grain-oriented electrical steel sheet manufacturing apparatus and a grain-oriented electrical steel sheet manufacturing method for manufacturing the grain-oriented electrical steel sheet. Therefore, industrial applicability is large.

[Brief Description of the Reference Symbols]

A, B, E Laser processing apparatus
C Sheet width direction
G Direction of major axis
L Rolling direction (longitudinal direction)

S Scanning direction (dot groove array direction)
PL Interval
θg Inclination angle
θs Scanning angle
1 Dot groove array
1A Dot groove
2 Grain-oriented electrical steel sheet
3 Laser irradiation unit
5 First optical system
6 Scanning mirror
7 Second optical system
10, 10A, 10B, 10D, 10F Pulsed laser beam (laser beam)
11 Cylindrical lens collimator
12 Polygon mirror
19 fθ Lens
30 Galvanometer mirror
33 Dot groove array
33A Groove part
33a Elliptical hole
34 Laser beam splitter (diffraction element)
35 Third optical system

**Claims**

1.  A grain-oriented electrical steel sheet having a rolling direction and a sheet width direction orthogonal to the rolling direction along a steel sheet surface, wherein

    the rolling direction coincides with an easy magnetization direction of the grain-oriented electrical steel sheet,
    the grain-oriented electrical steel sheet has a dot groove array extending along a dot groove array direction intersecting the sheet width direction on the steel sheet surface,
    the dot groove array is configured by linearly arranging a plurality of substantially elliptical dot grooves or a plurality of grouped dot grooves formed by linearly connecting a plurality of holes, and
    a major axis of the dot groove or the grouped dot groove intersects with the dot groove array direction.

2.  The grain-oriented electrical steel sheet according to claim 1, wherein
    when an angle formed by the major axis with respect to the sheet width direction is θg [°] and an angle formed by the dot groove array direction with respect to the sheet width direction is θs [°], the following (Formula 1) to (Formula 3) are satisfied:

    $$0° \leq |\theta g| \leq 10° \cdots \text{(Formula 1)}$$

    $$0° < |\theta s| \leq 30° \cdots \text{(Formula 2)}$$

    $$|\theta g| \leq |\theta s| \cdots \text{(Formula 3)}.$$

3.  The grain-oriented electrical steel sheet according to claim 1 or 2, wherein

    the dot groove array comprises the plurality of dot grooves, and
    when a length along a direction of the major axis of the dot groove is dc [μm] and an interval of end portions of the dot grooves adjacent to each other along the sheet width direction is D [μm], the following (Formula 4) is satisfied:

    $$-0.3 \leq (D/dc) \leq 0.2 \cdots \text{(Formula 4)}$$

    wherein, in the line of sight viewed along the rolling direction, the interval D [μm] is a positive value in a case where the end portions do not overlap each other, 0 [μm] in a case where the end portions are in contact at one point, and a negative value in a case where the end portions overlap each other.

4. The grain-oriented electrical steel sheet according to claim 1, wherein

the dot groove array comprises the plurality of dot grooves, and
when a length along a direction of the major axis of the dot groove is dc [μm], a direction orthogonal to the major axis is a minor axis direction of the dot groove, and a length along the minor axis direction of the dot groove is dL [μm], the following (Formula 5) and (Formula 6) are satisfied:

$$10 \ \mu m \le dL \le 300 \ \mu m \cdots \text{(Formula 5)}$$

$$dL \le dc \cdots \text{(Formula 6)}.$$

5. The grain-oriented electrical steel sheet according to claim 1, wherein

the dot groove array comprises the plurality of dot grooves, and
when a maximum depth of the dot groove is h [μm], the following (Formula 7) is satisfied:

$$5 \ \mu m \le h \le 100 \ \mu m \cdots \text{(Formula 7)}.$$

6. The grain-oriented electrical steel sheet according to claim 1, wherein

the plural dot groove arrays are formed on the steel sheet surface at equal intervals in the rolling direction, and
when an interval of the dot groove arrays adjacent to each other along the rolling direction is PL [mm], the following (Formula 8) is satisfied:

$$1 \ mm \le PL \le 10 \ mm \cdots \text{(Formula 8)}.$$

7. The grain-oriented electrical steel sheet according to claim 1, wherein

the dot groove array is divided into two or more in the sheet width direction, and when an interval between end portions of the dot groove arrays adjacent to each other at a division position along the sheet width direction is Da [mm], the following (Formula 9) is satisfied:

$$-10 \ mm \le Da \le 2 \ mm \cdots \text{(Formula 9)}$$

wherein, in the line of sight viewed along the rolling direction, the interval Da [mm] is a positive value in a case where the end portions do not overlap each other, 0 [μm] in a case where the end portions are in contact at one point, and a negative value in a case where the end portions overlap each other.

8. A grain-oriented electrical steel sheet manufacturing apparatus for manufacturing the grain-oriented electrical steel sheet according to any one of claims 1 to 7 by irradiating the steel sheet surface with a laser beam to form the dot groove array comprising the dot grooves, the apparatus comprising:

a laser irradiation unit that irradiates the laser beam;
a first optical system that forms a spotlight of the laser beam into an elliptical shape and adjusts a direction of the major axis of the ellipse formed by the spotlight;
a scanning mirror that reflects the laser beam adjusted by the first optical system to change a traveling direction, and moves a position on the steel sheet surface irradiated with the spotlight along a scanning direction intersecting the sheet width direction; and
a second optical system that transmits or reflects the laser beam reflected by the scanning mirror and condenses the laser beam on the steel sheet surface, wherein
the first optical system adjusts the direction of the major axis of the ellipse formed by the spotlight on the steel sheet surface in a direction intersecting the scanning direction,

the dot groove array is formed on the steel sheet surface by forming the dot grooves on the steel sheet surface for the each spotlight condensed on the steel sheet surface by the second optical system, and

when a pulse frequency of the laser beam is Fs [Hz], a moving speed of the spotlight on the steel sheet surface is Vs [m/s], a center-to-center distance of the dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 10) and (Formula 11) are satisfied:

$$Pc = D + dc \times \cos\theta g \cdots (Formula\ 10)$$

$$Pc/\cos\theta s = (Vs/Fs) \times 10^6 \cdots (Formula\ 11).$$

9. A grain-oriented electrical steel sheet manufacturing apparatus for manufacturing the grain-oriented electrical steel sheet according to any one of claims 1 to 7 by irradiating the steel sheet surface with a laser beam to form the dot groove array comprising the dot grooves, the apparatus comprising:

a laser irradiation unit that irradiates the laser beam;

a first optical system that forms a spotlight of the laser beam into an elliptical shape and adjusts a direction of the major axis of the ellipse formed by the spotlight;

a second optical system that transmits the laser beam adjusted by the first optical system and condenses the laser beam on the steel sheet surface; and

a scanning mirror that reflects the laser beam transmitted through the second optical system to change a traveling direction, and moves a position on the steel sheet surface irradiated with the spotlight along a scanning direction intersecting the sheet width direction, wherein

the first optical system adjusts the direction of the major axis of the ellipse formed by the spotlight on the steel sheet surface in a direction intersecting the scanning direction,

the dot groove array is formed on the steel sheet surface by forming the dot grooves on the steel sheet surface for the each spotlight condensed on the steel sheet surface by the second optical system, and

when a pulse frequency of the laser beam is Fs [Hz], a moving speed of the spotlight on the steel sheet surface is Vs [m/s], a center-to-center distance of the dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 12) and (Formula 13) are satisfied:

$$Pc = D + dc \times \cos\theta g \cdots (Formula\ 12)$$

$$Pc/\cos\theta s = (Vs/Fs) \times 10^6 \cdots (Formula\ 13).$$

10. A grain-oriented electrical steel sheet manufacturing apparatus for manufacturing the grain-oriented electrical steel sheet according to claim 1 or 2 by irradiating the steel sheet surface with a laser beam to form the dot groove array comprising the grouped dot grooves, the apparatus comprising:

a laser irradiation unit that irradiates the laser beam;

a first optical system that forms a spotlight of the laser beam into an elliptical shape and adjusts a direction of the major axis of the ellipse formed by the spotlight;

a laser beam intensity profile conversion element that transmits the laser beam adjusted by the first optical system and splits the laser beam into a plurality of intensity profiles, thereby converting the laser beam into continuous spotlights continuing in a group;

a scanning mirror that reflects the continuous spotlights converted by the laser beam intensity profile conversion element to change a traveling direction, and moves a position on the steel sheet surface on which a central position of each group of the continuous spotlights is irradiated, along a scanning direction intersecting the sheet width direction; and

a third optical system that transmits the continuous spotlights reflected by the scanning mirror and condenses the continuous spotlights on the steel sheet surface, wherein

the first optical system adjusts a direction of the continuous direction of the continuous spotlights on the steel sheet surface to a direction intersecting the scanning direction;

the dot groove array is formed on the steel sheet surface by forming the grouped dot grooves on the steel sheet surface for each of the continuous spotlights condensed on the steel sheet surface by the third optical system, and when a pulse frequency of the laser beam is Fs [Hz], a moving speed of the spotlight on the steel sheet surface is Vs [m/s], a center-to-center distance of the grouped dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 14) and (Formula 15) are satisfied:

$$Pc = D + dc \times cos\theta g \cdots \text{(Formula 14)}$$

$$Pc/cos\theta s = (Vs/Fs) \times 10^6 \cdots \text{(Formula 15)}.$$

11. A grain-oriented electrical steel sheet manufacturing method for manufacturing the grain-oriented electrical steel sheet according to any one of claims 1 to 7 by irradiating the steel sheet surface with a laser beam to form the dot groove array comprising the dot grooves, the method comprising:

a first step of forming a spotlight of the laser beam into an elliptical shape and adjusting a direction of the major axis of the ellipse formed by the spotlight;

a second step of changing a traveling direction of the laser beam in which the direction of the major axis is adjusted, and moving a position on the steel sheet surface irradiated with the spotlight along a scanning direction intersecting the sheet width direction; and

a third step of condensing the spotlight on the steel sheet surface, wherein

in the first step, the direction of the major axis of the ellipse formed by the spotlight on the steel sheet surface is adjusted in a direction intersecting the scanning direction, and

in the third step, the dot groove array is formed on the steel sheet surface by forming the dot grooves on the steel sheet surface for the each spotlight condensed on the steel sheet surface.

12. The grain-oriented electrical steel sheet manufacturing method according to claim 11, wherein

when a pulse frequency of the laser beam is Fs [Hz], a moving speed of the spotlight on the steel sheet surface is Vs [m/s], a center-to-center distance of the grouped dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 16) and (Formula 17) are satisfied:

$$Pc = D + dc \times cos\theta g \cdots \text{(Formula 16)}$$

$$Pc/cos\theta s = (Vs/Fs) \times 10^6 \cdots \text{(Formula 17)}.$$

13. A grain-oriented electrical steel sheet manufacturing method for manufacturing the grain-oriented electrical steel sheet according to claim 1 or 2 by irradiating the steel sheet surface with a laser beam to form the dot groove array comprising the grouped dot grooves, the method comprising:

a fourth step of forming a spotlight of the laser beam into an elliptical shape and adjusting a direction of the major axis of the ellipse formed by the spotlight;

a fifth step of splitting the laser beam in which the direction of the major axis is adjusted into a plurality of intensity profiles to convert the laser beam into continuous spotlights continuing in a group;

a sixth step of moving a position on the steel sheet surface on which a central position of the each group of the continuous spotlights is irradiated, along a scanning direction intersecting the sheet width direction; and

a seventh step of condensing the continuous spotlights on the steel sheet surface, wherein

in the fifth step, a direction of the continuous direction of the continuous spotlights on the steel sheet surface is adjusted to a direction intersecting the scanning direction, and
in the seventh step, the grouped dot grooves are formed on the steel sheet surface for each of the continuous spotlights condensed on the steel sheet surface to form the dot groove array on the steel sheet surface.

14. The grain-oriented electrical steel sheet manufacturing method according to claim 13, wherein
when a pulse frequency of the laser beam is Fs [Hz], a moving speed of the spotlight on the steel sheet surface is Vs [m/s], a center-to-center distance of the grouped dot grooves adjacent to each other along the sheet width direction is Pc [μm], a length of the dot grooves along the direction of the major axis is dc [μm], an interval of end portions of the dot grooves adjacent to each other along the sheet width direction is D [μm], an angle formed by the major axis with respect to the sheet width direction is θg [°], and an angle formed by the dot groove array direction with respect to the sheet width direction is θs [°], the following (Formula 16) and (Formula 17) are satisfied:

$$\mathrm{Pc} = \mathrm{D} + \mathrm{dc} \times \cos\theta g \cdots \text{(Formula 16)}$$

$$\mathrm{Pc}/\cos\theta s = (\mathrm{Vs}/\mathrm{Fs}) \times 10^6 \cdots \text{(Formula 17)}.$$

FIG. 1

(A)

(B)

(C)

(D)

(E)

FIG. 2

EP 4 467 278 A1

# FIG. 3

(A)

(C-1)

(C-2)

(B)

EP 4 467 278 A1

# FIG. 4

(A)

(B)

(C-1)

(C-2)

EP 4 467 278 A1

# FIG. 5

(A)  (B)  (C-1)  (C-2)

EP 4 467 278 A1

FIG. 6

EP 4 467 278 A1

FIG. 7

# FIG. 8

# FIG. 9

# FIG. 10

# FIG. 11

FIG. 12

# FIG. 13

FIG. 14

(A)

(B)

(C)

EP 4 467 278 A1

# FIG. 15

FIG. 16

(A)

(B)

EP 4 467 278 A1

FIG. 17

FIG. 18

<table>
<tr><td colspan="2" align="center">**INTERNATIONAL SEARCH REPORT**</td><td>International application No.<br><br>**PCT/JP2023/001757**</td></tr>
</table>

**A. CLASSIFICATION OF SUBJECT MATTER**

*B23K 26/364*(2014.01)i; *B23K 26/073*(2006.01)i; *B23K 26/082*(2014.01)i; *C21D 8/12*(2006.01)i
FI: B23K26/364; B23K26/073; B23K26/082; C21D8/12 D

According to International Patent Classification (IPC) or to both national classification and IPC

**B. FIELDS SEARCHED**

Minimum documentation searched (classification system followed by classification symbols)

B23K26/364; B23K26/073; B23K26/082; C21D8/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-125250 A (NIPPON STEEL & SUMITOMO METAL CORP.) 20 July 2017 (2017-07-20)<br>paragraphs [0027]-[0076], fig. 1-8B | 1-2, 6-7 |
| A | | 3-5, 8-14 |
| Y | JP 2019-137883 A (NIPPON STEEL CORP.) 22 August 2019 (2019-08-22)<br>paragraph [0078], fig. 1 | 1-2, 6-7 |
| A | | 3-5, 8-14 |
| Y | JP 2006-233299 A (NIPPON STEEL CORP.) 07 September 2006 (2006-09-07)<br>paragraphs [0006], [0007], fig. 1 | 1-2, 6-7 |
| A | | 3-5, 8-14 |
| Y | WO 2012/164702 A1 (NIPPON STEEL & SUMITOMO METAL CORP.) 06 December 2012 (2012-12-06)<br>paragraphs [0018]-[0045], fig. 1-9 | 1-2, 6-7 |
| A | | 3-5, 8-14 |

☐ Further documents are listed in the continuation of Box C. ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/001757**

| Patent document cited in search report | | | Publication date (day/month/year) | Patent family member(s) | Publication date (day/month/year) |
|---|---|---|---|---|---|
| JP | 2017-125250 | A | 20 July 2017 | (Family: none) | |
| JP | 2019-137883 | A | 22 August 2019 | (Family: none) | |
| JP | 2006-233299 | A | 07 September 2006 | (Family: none) | |
| WO | 2012/164702 | A1 | 06 December 2012 | KR 10-2013-0140902 A paragraphs [0021]-[0075], fig. 1-9<br>CN 103596720 A | |

Form PCT/ISA/210 (patent family annex) (January 2015)

**REFERENCES CITED IN THE DESCRIPTION**

**Patent documents cited in the description**

- JP 2022007442 A
- WO 2016171129 A
- WO 2017171013 A
- WO 2016171130 A
- WO 97024466 A